# EUROPEAN PATENT APPLICATION

(11) **EP 3 659 799 A1**
(43) Date of publication of application: **03.06.2020**
(21) Application number: 18839370.6
(22) Date of filing: 25.04.2018
(51) Int. Cl.: B32B 17/10, B32B 7/02, C09J 7/00, C09J 163/00, C09J 171/00

(54) **LAMINATED BODY AND FLEXIBLE DEVICE PROVIDED WITH SAID LAMINATED BODY**

(30) Priority: 28.07.2017 JP 2017147077; 06.04.2018 JP 2018073646; 06.04.2018 JP 2018073647; 06.04.2018 JP 2018073648; 06.04.2018 JP 2018073649; 06.04.2018 JP 2018073650; 06.04.2018 JP 2018073651; 06.04.2018 JP 2018073652
(71) Applicant: Daicel Corporation, Osaka-shi, Osaka 530-0011 (JP)
(72) Inventor: NISHIO, Naotaka, Himeji-shi Hyogo 671-1283 (JP); MIZUTA, Tomoya, Himeji-shi Hyogo 671-1283 (JP); IWAYA, Masao, Tokyo 108-8230 (JP); NAKAMURA, Toshikazu, Himeji-shi Hyogo 671-1283 (JP)
(74) Representative: Grünecker Patent- und Rechtsanwälte PartG mbB
(86) International application number: PCT/JP2018/016763
(87) International publication number: WO 2019/021557

(57) **Abstract**

The present invention provides a laminated body obtained by bonding a thinned glass plate and a resin film with an adhesive agent, the laminated body having excellent bending resistance. The laminated body according to an embodiment of the present invention comprising a structure having a glass plate with a thickness of 150 µm or less and a resin film laminated with an adhesive layer; the laminated body having a bending resistance based on a test below of 10 or greater. Bending Resistance Test: in the case where a set of operation includes bending a laminated body for 180° from a state where the laminated body is stretched, in a direction that makes a surface of a glass plate concave and a bending radius 3 mm and then stretching the laminated body again, an index of the bending resistance is the number of sets of the operation until the laminated body cracks when the operation was performed at a rate of 43 sets per minute.

## Description

### Technical Field

The present invention relates to a laminated body having a thinned glass plate and having excellent bending resistance and to a flexible device provided with the laminated body. The present application claims priority to JP 2017-147077 filed to Japan on July 28, 2017 and JP 2018-073646, JP 2018-073647, JP 2018-073648, JP 2018-073649, JP 2018-073650, JP 2018-073651, and JP 2018-073652 filed to Japan on April 6, 2018, whose content is incorporated herein.

### Background Art

For touch screens of personal digital assistances such as smartphones and tablet computers and displays such as organic EL displays, glass plates have been used from the viewpoints of high hardness, transparency, high quality, and the like. However, such glass plates lack flexibility and are easily broken and thus caused problems.

Patent Document 1 describes a thinned glass plate and describes that the thinned glass plate has excellent flexibility (i.e., has flexibility and can be bent slowly).

### Citation List

### Patent Document

Patent Document 1: JP 2010-105900 A

### Summary of Invention

### Technical Problem

However, even though the thinned glass plate has flexibility, there are problems such as being easily broken, having difficulty in handling, and having poor bending resistance.

An object of the present invention is to provide a laminated body obtained by bonding a thinned glass plate and a resin film with an adhesive agent, the laminated body having excellent bending resistance.

Another object of the present invention is to provide a laminated body obtained by bonding a thinned glass plate and a resin film with an adhesive agent, the laminated body having excellent bending resistance and excellent curling resistance.

Another object of the present invention is to provide a flexible device and a component for flexible devices that have the laminated body.

Another object of the present invention is to provide an adhesive agent for use in producing the laminated body.

Another object of the present invention is to provide a method for producing the laminated body.

### Solution to Problem

As a result of diligent research to solve the problems described above, the inventors of the present invention found a laminated body that is obtained by bonding a thinned glass plate and a resin film with an adhesive agent and that has excellent flexibility, bending resistance, curling resistance, and ease of handling. The present invention has been completed based on these findings.

That is, an embodiment of the present invention provides a laminated body that has a structure having a glass plate with a thickness of 150 µm or less and a resin film laminated with an adhesive layer and that has a bending resistance based on the following test of 10 or greater. Bending Resistance Test:

In the case where a set of operation includes bending a laminated body for 180° from a state where the laminated body is stretched, in a direction that makes a surface of a glass plate concave and a bending radius 3 mm and then stretching the laminated body again, an index of the bending resistance is the number of sets of the operation until the laminated body cracks when the operation was performed at a rate of 43 sets per minute.

An embodiment of the present invention also provides the laminated body described above, where adhesion of the adhesive layer to a glass plate is classified as 0 to 2 in a 6-grade classification test (in accordance with JIS K 5600-5-6).

An embodiment of the present invention also provides the laminated body described above, where a storage modulus of the adhesive layer at 20°C measured by using a dynamic viscoelasticity measuring device is 10 MPa or greater.

An embodiment of the present invention also provides the laminated body described above, where a glass transition temperature of the adhesive layer measured by using a dynamic viscoelasticity measuring device is lower than 5°C.

An embodiment of the present invention also provides the laminated body described above, where a total thickness of the laminated body is 300 µm or less.

An embodiment of the present invention also provides the laminated body described above, where a total light transmittance of the laminated body is 80% or greater.

An embodiment of the present invention also provides the laminated body described above, where the adhesive layer is a cured product of an adhesive agent (1) below.

The adhesive agent (1): The adhesive agent (1) contains cationically polymerizable monomers and a curing catalyst; and contains, as the cationically polymerizable monomers, at least 10 wt.% of a compound having at least one hydroxy group and at least one cationically polymerizable group selected from the group consisting of a vinyl ether group, an epoxy group, and an oxetanyl group in a molecule, relative to a total amount of the cationically polymerizable monomers, and at least 5 wt.% of a compound represented by Formula (b) below, relative to the total amount of the cationically polymerizable monomers.

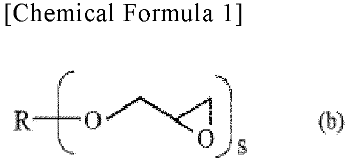

In the formula, R represents an s-valent straight-chain or branched saturated aliphatic hydrocarbon group or an s-valent group in which two or more straight-chain or branched saturated aliphatic hydrocarbon groups are bonded through an ether bond, and s represents an integer of 2 or greater.

An embodiment of the present invention also provides the laminated body described above, where the adhesive agent (1) further contains, as the cationically polymerizable monomers, at least 10 wt.% of a compound represented by Formula (b') below, relative to the total amount of the cationically polymerizable monomers.

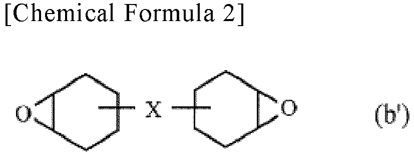

In the formula, X represents a single bond or a linking group.

An embodiment of the present invention also provides the laminated body described above, where the adhesive layer is a cured product of an acrylic urethane-based adhesive agent (2) containing urethane (meth)acrylate or a polymer thereof.

An embodiment of the present invention also provides the laminated body described above, where the adhesive layer is a cured product of a vinyl acetate-based adhesive agent (3) containing a vinyl acetate-based polymer.

An embodiment of the present invention also provides the laminated body described above, where a minimum bending radius of the glass plate is 3 mm or less.

An embodiment of the present invention also provides the laminated body described above, where the resin film is formed by laminating in a manner that an MD direction of the resin film is along a bending direction of the laminated body.

An embodiment of the present invention also provides a laminated body having a structure having a glass plate with a thickness of 150 µm or less and a resin film laminated with an adhesive layer formed from a cured product of an adhesive agent below.

The adhesive agent: The adhesive agent contains cationically polymerizable monomers and a curing catalyst and contains, as the cationically polymerizable monomers, at least 10 wt.% of a compound having at least one hydroxy group and at least one cationically polymerizable group selected from the group consisting of a vinyl ether group, an epoxy group, and an oxetanyl group in a molecule, relative to a total amount of the cationically polymerizable monomers, and at least 5 wt.% of a compound represented by Formula (b) below, relative to the total amount of the cationically polymerizable monomers.

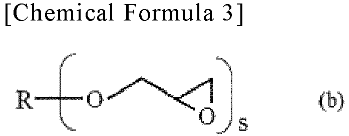

In the formula, R represents an s-valent straight-chain or branched saturated aliphatic hydrocarbon group or an s-valent group in which two or more straight-chain or branched saturated aliphatic hydrocarbon groups are bonded through an ether bond, and s represents an integer of 2 or greater.

An embodiment of the present invention also provides a wound body formed by winding the laminated body described above in a roll form.

An embodiment of the present invention also provides a component for a flexible device, the component having the laminated body described above.

An embodiment of the present invention also provides a flexible device having the laminated body described above.

An embodiment of the present invention also provides an adhesive agent for glass, the adhesive agent containing cationically polymerizable monomers and a curing catalyst; and containing, as the cationically polymerizable monomers, at least 10 wt.% of a compound having at least one hydroxy group and at least one cationically polymerizable group selected from the group consisting of a vinyl ether group, an epoxy group, and an oxetanyl group in a molecule, relative to a total amount of the cationically polymerizable monomers, and at least 5 wt.% of a compound represented by Formula (b) below, relative to the total amount of the cationically polymerizable monomers.

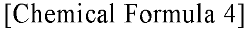

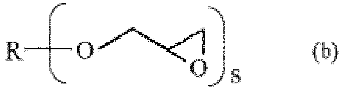

In the formula, R represents an s-valent straight-chain or branched saturated aliphatic hydrocarbon group or an s-valent group in which two or more straight-chain or branched saturated aliphatic hydrocarbon groups are bonded through an ether bond, and s represents an integer of 2 or greater.

An embodiment of the present invention also provides a method for producing a laminated body, the method including:
adhering a glass plate having a thickness of 150 µm or less and a resin film with an adhesive agent (1), the adhesive agent containing cationically polymerizable monomers and a curing catalyst and containing, as the cationically polymerizable monomers, at least 10 wt.% of a compound having at least one hydroxy group and at least one cationically polymerizable group selected from the group consisting of a vinyl ether group, an epoxy group, and an oxetanyl group in a molecule, relative to a total amount of the cationically polymerizable monomers, and at least 5 wt.% of a compound represented by Formula (b) below, relative to the total amount of the cationically polymerizable monomers: 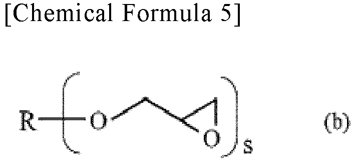
(in the formula, R represents an s-valent straight-chain or branched saturated aliphatic hydrocarbon group or an s-valent group in which two or more straight-chain or branched saturated aliphatic hydrocarbon groups are bonded through an ether bond, and s represents an integer of 2 or greater),
an acrylic urethane-based adhesive agent (2), or
a vinyl acetate-based adhesive agent (3); and then
curing the adhesive agent to obtain the laminated body described above.

### Advantageous Effects of Invention

The laminated body according to an embodiment of the present invention has excellent flexibility, bending resistance, and excellent curling resistance. Furthermore, the laminated body is less likely to be broken compared to a thinned glass by itself, and ease of handling is achieved. Therefore, the laminated body can be suitably used as a component for flexible devices (electronic material/electronic component that requires flexibility, examples thereof including touch screens of personal digital assistances (such as smartphones and tablet computers), displays such as organic EL displays, protective films, and the like).

Furthermore, the laminated body according to an embodiment of the present invention can be wound into a roll form to form a wound body, can be stored without being bulky, and can be easily carried.

Furthermore, in the case where the laminated body according to an embodiment of the present invention is used in a touch screen or the like, upon touching by a finger, tactile impression and a sense of high quality originated from the glass plate can be achieved.

Furthermore, the adhesive agent (1) can form a cured product having excellent adhesion for glass. Therefore, the adhesive agent (1) can be suitably used as an adhesive agent for glass (that is, adhesive agent used for the purpose of adhering glass).

In particular, in the case where the laminated body according to an embodiment of the present invention is produced by using the adhesive agent (1), because the adhesive agent (1) has a low viscosity and excellent coatability before irradiation with ultraviolet light and because the adhesive agent (1) rapidly cures even in the presence of oxygen when being irradiated with ultraviolet light and thus can form a cured product having excellent adhesion to glass, primer treatment or the like in advance on the surface of the glass is not necessary, adhesion by direct coating on the glass is possible, and thus excellent workability is achieved. Furthermore, because of low curing shrinkage, occurrence of curls in the laminated body can be prevented.

### Brief Description of Drawings

FIG. 1 is a schematic diagram illustrating a measurement method of a floating amount of a test piece when curling resistance is evaluated.

FIG. 2 is a schematic diagram (side view) illustrating a test method (R-bending method) for bending resistance according to an embodiment of the present invention (a set of operation including bending a laminated body for 180° in a direction that makes a surface of a glass plate concave and a bending radius (R) 3 mm and then stretching the laminated body).

FIG. 3 is a diagram in which (4) of FIG. 2 is magnified.

FIG. 4 is a schematic cross-sectional diagram illustrating a laminated body (1) of an embodiment of the present invention, in which a resin film (6) is adhered to a glass plate (4) with an adhesive layer (5) by adjusting the orientation of the resin film (6) in a manner that an MD direction of the resin film (6) is in parallel with a bending direction of the laminated body.

### Description of Embodiments

### Laminated Body

The laminated body according to an embodiment of the present invention has a structure in which a glass plate with a thickness of 150 µm or less and a resin film are laminated with an adhesive layer. That is, the laminated body at least has a three-layered laminated structure of thinned glass plate/adhesive layer/resin film.

The laminated body according to an embodiment of the present invention may have another layer besides the three layers, which are thinned glass plate/adhesive layer/resin film, one or two or more other layers may be further laminated on a face that is opposite the adhesive layer laminated face of the thinned glass plate, or one or two or more other layers may be further laminated on a face that is opposite the adhesive layer laminated face of the resin film.

Since the laminated body according to an embodiment of the present invention has the structure described above, stress loading on the glass plate when the laminated body is bent can be mitigated by the adhesive layer, and excellent bending resistance can be exhibited. That is, it is possible to suppress occurrence of cracks in the glass plate even when bending and stretching are repeated. The bending resistance determined by the following test is 10 or greater, preferably 100 or greater, particularly preferably 1000 or greater, even more preferably 2000 or greater, and most preferably 10000 or greater. Bending Resistance Test:

In the case where a set of operation includes bending a laminated body for 180° from a state where the laminated body is stretched, in a direction that makes a surface of a glass plate concave and a bending radius 3 mm and then stretching the laminated body again, an index of the bending resistance is the number of sets of the operation until the laminated body cracks when the operation was performed at a rate of 43 sets per minute.

Furthermore, the total thickness of the laminated body is, for example, 300 µm or less, from the viewpoint of achieving extremely excellent bending resistance, preferably 250 µm or less, particularly preferably 200 µm or less, and most preferably 150 µm or less. Note that the lower limit of the total thickness is, for example, 50 µm, preferably 75 µm, and particularly preferably 100 µm.

The laminated body according to an embodiment of the present invention has excellent transparency, and the total light transmittance is, for example 80% or greater, preferably 85% or greater, particularly preferably 88% or greater, and most preferably 90% or greater.

Since the laminated body according to an embodiment of the present invention has excellent flexibility, the laminated body can be wound into a roll form to form a wound body. The wound body can be stored without being bulky and can be easily carried.

For example, the laminated body according to an embodiment of the present invention can be suitably used as a component for flexible devices (including electronic material/electronic component that requires flexibility, and examples thereof include touch screens of personal digital assistances (such as smartphones and tablet computers), displays such as and organic EL displays, protective films, and the like).

### Glass Plate

The thickness of the glass plate constituting the laminated body according to an embodiment of the present invention is 150 µm or less, preferably 100 µm or less, particularly preferably 75 µm or less, and most preferably 50 µm or less. Furthermore, from the viewpoint of achieving extremely excellent bending resistance, the thickness is preferably 10 µm or greater, more preferably 20 µm or greater, and particularly preferably 30 µm or greater.

As the glass plate, use of a glass plate having a minimum bending radius of 3 mm or less (that is, a glass plate that can be folded at least once until the bending radius becomes 3 mm or less) is preferred from the viewpoint of remarkably enhancing probability of obtaining a laminated body having excellent bending resistance. A glass plate having a minimum bending radius of greater than 3 mm often has small scratches that cannot be visually observed on a surface or an edge of the glass plate, and in a case where such glass plate is used, the resulting laminated body tends to have insufficient bending resistance.

### Resin Film

As the resin film constituting the laminated body according to an embodiment of the present invention, use of a plastic film having excellent transparency (total light transmittance is, for example, 80% or greater) is preferred.

Examples of the material of the plastic film include thermoplastics and thermosetting plastics. Examples of the thermoplastic include general purpose plastics, such as polyethylene, polypropylene, polyethylene terephthalate (PET), polyvinyl chloride, acrylonitrile-butadiene-styrene (ABS), polyvinylidene chloride, cellulose acetate (e.g., triacetylcellulose (TAC)), and polyethylene naphthalate (PEN); engineering plastics, such as polyamide, polycarbonate, and polyvinylidene fluoride; super engineering plastics, such as polysulfone, polyether sulfone, polyphenylene sulfide, polyamideimide (PAI), polyimide (PI), and polyether ether ketone (PEEK); and the like. Examples of the thermosetting plastics include phenol resins, melamine resins, polyurethane, silicon resins, and the like.

As the resin film, among these, from the viewpoint of achieving extremely excellent bending resistance, a plastic film formed from at least one type of material selected from the group consisting of PET, PAI, PI, cellulose acetate (especially, TAC), and PEN is preferred, and a plastic film formed from PET or PI is particularly preferred.

The thickness of the resin film is, for example, 150 µm or less, preferably 140 µm or less, particularly preferably 120 µm or less, most preferably 100 µm or less, even more preferably 80 µm or less, and especially preferably 70 µm or less. Furthermore, from the viewpoint of achieving extremely excellent bending resistance, the thickness is preferably 10 µm or greater, more preferably 20 µm or greater, and particularly preferably 30 µm or greater.

### Adhesive Layer

The thickness of the adhesive layer constituting the laminated body according to an embodiment of the present invention is, for example, 100 µm or less, preferably 80 µm or less, particularly preferably 50 µm or less, and most preferably 30 µm or less. Note that the lower limit of the thickness is, for example, 1 µm and preferably 5 µm. The adhesive layer within the range described above is preferred from the viewpoint of achieving all of the transparency (total light transmittance of, for example, 80% or greater), adhesion, and bending resistance. An excessively large thickness of the adhesive layer tends to deteriorate bending resistance and transparency although adhesion is enhanced.

The adhesive layer (preferably the adhesive layer formed from a cured product of the adhesive agent (1) described below) preferably has excellent adhesion to glass plates and/or resin films. The adhesion to glass plates and/or resin films of the adhesive layer (or the cured product of the adhesive agent) is classified as, for example, 0 to 2 in the 6-grade classification test of Cross-cut test (in accordance with JIS K 5600-5-6).

Furthermore, the elastic modulus (e.g., Young's Modulus at 25°C) of the adhesive layer (preferably the adhesive layer formed from a cured product of the adhesive agent (1) described below) is, for example, preferably from 0.01 MPa to 1000 GPa from the viewpoint of imparting excellent bending resistance to a laminated body according to an embodiment of the present invention, particularly preferably from 1 MPa to 100 GPa, most preferably from 5 MPa to 50 GPa, and especially preferably from 5 MPa to 10 GPa.

Furthermore, the adhesive layer preferably has excellent heat resistance from the viewpoints of maintaining bending resistance of the laminated body according to an embodiment of the present invention high even in a high temperature environment and making the laminated body possible to be used in car-mounted devices. The glass transition temperature (Tg) or the melting point (Tm) of the adhesive layer (preferably the adhesive layer formed from a cured product of the adhesive agent (1) described below) is preferably 70°C or higher and particularly preferably 80°C or higher. Furthermore, the upper limit is, for example, 150°C. Note that the glass transition temperature (Tg) or the melting point (Tm) can be measured by, for example, thermal analysis such as DSC and TGA or dynamic viscoelastic measurement.

Furthermore, by laminating a glass plate on a resin film with the adhesive layer (preferably the adhesive layer formed from a cured product of the adhesive agent (1) described below), the surface hardness of the glass plate can be maintained high without being impaired. Therefore, in terms of the surface hardness of the glass plate surface of the laminated body according to an embodiment of the present invention, the pencil hardness (JIS K 5600-5-4 (ISO/DIN 15184)) is, for example, H or greater, preferably 2H or greater, particularly preferably 3H or greater, and most preferably 5H or greater. Furthermore, even after the laminated body according to an embodiment of the present invention is bent repeatedly, the laminated body can maintain the surface hardness (especially, the surface hardness of the bent portion) high as described above.

Furthermore, the storage modulus at 20°C of the adhesive layer formed from the cured product of the acrylic urethane-based adhesive agent (2) described below (or the cured product of the acrylic urethane-based adhesive agent (2) described below constituting the adhesive layer) is preferably 10 MPa or greater, more preferably 50 MPa or greater, particularly preferably 80 MPa or greater, and most preferably 120 MPa or greater, from the viewpoint of imparting excellent bending resistance to the laminated body according to an embodiment of the present invention. Note that the storage modulus in the present specification is a value measured by using a dynamic viscoelasticity measuring device.

Furthermore, the glass transition temperature (Tg) of the adhesive layer formed from the cured product of the acrylic urethane-based adhesive agent (2) described below (or the cured product of the acrylic urethane-based adhesive agent (2) described below constituting the adhesive layer) measured by using a dynamic viscoelasticity measuring device is preferably from 0 to 100°C, more preferably from 0 to 70°C, and particularly preferably from 0 to 30°C, from the viewpoint of imparting excellent bending resistance to the laminated body according to an embodiment of the present invention. Note that the glass transition temperature can be determined by, for example, a method in accordance with JIS K 7244-4. More specifically, the glass transition temperature can be determined as a temperature at the maximum of a peak of tan δ (loss tangent) measured by a dynamic viscoelasticity measurement (e.g., dynamic viscoelasticity measurement in the following condition: rate of temperature increase: 5°C/min; measurement temperature: 20 to 350°C; and deformation mode: tensile mode).

Furthermore, the storage modulus at 20°C of the adhesive layer formed from the cured product of the vinyl acetate-based adhesive agent (3) described below (or the cured product of the vinyl acetate-based adhesive agent (3) described below constituting the adhesive layer) is preferably from 10 to 200 MPa, more preferably from 30 to 150 MPa, and particularly preferably from 30 to 100 MPa, from the viewpoint of imparting excellent bending resistance to the laminated body according to an embodiment of the present invention.

Furthermore, the glass transition temperature (Tg) of the adhesive layer formed from the cured product of the vinyl acetate-based adhesive agent (3) described below (or the cured product of the vinyl acetate-based adhesive agent (3) described below constituting the adhesive layer) measured by using a dynamic viscoelasticity measuring device is preferably 5°C or lower, more preferably lower than -5°C, and particularly preferably -10°C or lower, from the viewpoint of imparting excellent bending resistance to the laminated body according to an embodiment of the present invention. Furthermore, the lower limit of the glass transition temperature is, for example, preferably -30°C and particularly preferably -20°C.

### Adhesive Agent

The adhesive layer is formed from a cured product of an adhesive agent. Examples of the adhesive agent for forming the adhesive layer include ultraviolet curable adhesive agents, thermosetting adhesive agents, thermoplastic adhesive agents, and the like. Among these curable adhesive agents, an ultraviolet curable adhesive agent is preferable from the viewpoints of excellent rapid curability and usability in resin film having low heat resistance. Note that "curing" in the present specification includes curing involving polymerization of monomers of a radical curable or cationic curable adhesive agent and curing (or solidification) by cooling of a thermoplastic adhesive agent that had been softened by heating.

The ultraviolet-curable adhesive agents include radical curable and cationic curable types. A radical curable adhesive agent is superior from the viewpoints of rapid curability and plentiful monomer types. On the other hand, a cationic curable adhesive agent is superior from the viewpoints of being less likely to be affected by curing inhibition caused by oxygen and rapidly curing even in the presence of oxygen. Furthermore, due to low curing shrinkage, dimensional stability is also excellent. In the case where a thinned resin film and a glass plate are adhered by using an adhesive agent having a large curing shrinkage, curls tend to be formed in the resulting laminated body due to the curing shrinkage of the adhesive agent.

The cationic curable adhesive agent contains cationically polymerizable monomers and a curing catalyst.

### Cationically Polymerizable Monomers

Examples of the cationically polymerizable monomers include compounds having at least one type of cationically polymerizable group selected from the group consisting of a vinyl ether group, an epoxy group, and an oxetanyl group.

In an embodiment of the present invention, among these, as the cationically polymerizable monomers, at least 10 wt.% of a compound having at least one hydroxy group and at least one cationically polymerizable group selected from the group consisting of a vinyl ether group, an epoxy group, and an oxetanyl group in a molecule (hereinafter, also referred to as "compound (I)"), relative to a total amount of the cationically polymerizable monomers, and at least 5 wt.% of a compound represented by Formula (b) below (hereinafter, also referred to as "compound (b)"), relative to the total amount of the cationically polymerizable monomers are preferably contained.

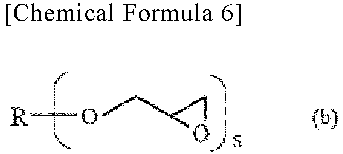

In the formula, R represents an s-valent straight-chain or branched saturated aliphatic hydrocarbon group or an s-valent group in which two or more straight-chain or branched saturated aliphatic hydrocarbon groups are bonded through an ether bond, and s represents an integer of 2 or greater.

Therefore, as the cationic curable adhesive agent, an adhesive agent that contains at least 10 wt.% of the compound (I), relative to the total amount of the cationically polymerizable monomers, and at least 5 wt.% of the compound (b), relative to the total amount of the cationically polymerizable monomers (hereinafter, also referred to as "adhesive agent (1)"), is preferred.

The adhesive agent (1) has excellent adhesion to glass plates and can adhere a glass plate and a resin film with extremely superior adhesive force even when a surface of the glass plate is not subjected to a preprocess (e.g., primer treatment, plasma treatment, corona treatment, and the like). Therefore, the adhesive agent (1) can be suitably used as an adhesive agent for glass, that is, an adhesive agent used for the purpose of adhering glass. Furthermore, due to excellent adhesive force, use of extremely small amount can achieve adhesion of a glass plate and a resin film. In the case where a glass plate or a resin film is transparent, adhesion can be performed without deteriorating the transparency, and a laminated body having excellent transparency (total light transmittance of, for example, 80% or greater) can be formed. Furthermore, a cured product of the adhesive agent (1) suppresses brittleness to significantly low, and has excellent toughness.

### Compound (I)

The compound (I) is a compound having at least two types of functional groups in a molecule. Specifically, the compound (I) is a compound having at least one cationically polymerizable group selected from the group consisting of a vinyl ether group, an epoxy group, and an oxetanyl group, and at least one hydroxy group in a molecule. The cured product formed by curing the adhesive agent containing the compound (I) has high hardness because the two types of the functional groups polymerize to form a highly crosslinked structure.

In particular, from the viewpoints of achieving high hardness and low curing shrinkage and enhancing adhesion of the resulting cured product, the compound (I) is preferably a compound (i) having one hydroxy group and one cationically polymerizable group selected from the group consisting of a vinyl ether group, an epoxy group, and an oxetanyl group in a molecule.

The compound (i) include the following three types of compounds.
i-1: A compound having one vinyl ether group and one hydroxy group
i-2: A compound having one epoxy group and one hydroxy group
i-3: A compound having one oxetanyl group and one hydroxy group

The compound (i) is represented by the following formula, for example: HO-R^{a}-Y (i)
where R^{a} represents a divalent hydrocarbon group, a divalent heterocyclic group, or a divalent group having these bonded to each other through a single bond or a linking group, Y represents a cationically polymerizable group selected from the group consisting of a vinyl ether group, an epoxy group, and an oxetanyl group.

The hydrocarbon group includes aliphatic hydrocarbon groups, alicyclic hydrocarbon groups, and aromatic hydrocarbon groups.

Examples of the divalent aliphatic hydrocarbon group include straight-chain or branched alkylene groups having from 1 to 18 carbons, such as a methylene group, a methylmethylene group, a dimethylmethylene group, an ethylene group, a propylene group, and a trimethylene group; straight-chain or branched alkenylene groups having from 2 to 18 carbons, such as vinylene, 1-methylvinylene, propenylene, 1-butenylene, 2-butenylene, 1-pentenylene, and 2-pentenylene group; and straight-chain or branched alkynylene groups having from 2 to 18 carbons, such as ethynylene, propynylene, 3-methyl-1-propynylene, butynylene, and 1,3-butadiynylene group.

The alicyclic ring constituting the divalent alicyclic hydrocarbon group includes monocyclic hydrocarbon rings and polycyclic hydrocarbon rings. The polycyclic hydrocarbon ring includes spiro hydrocarbon rings, ring-assembly hydrocarbon rings, bridged cyclic hydrocarbon rings, fused cyclic hydrocarbon rings, and bridged fused cyclic hydrocarbon rings. Examples of the divalent alicyclic hydrocarbon group include groups obtained by removing two hydrogen atoms from the alicyclic structural formula described above.

Examples of the monocyclic hydrocarbon ring include C₃₋₁₂ cycloalkane rings, such as cyclopropane, cyclobutane, cyclopentane, cyclohexane, cycloheptane, and cyclooctane; and C₃₋₁₂ cycloalkene rings, such as cyclopentene and cyclohexene.

Examples of the spiro hydrocarbon ring include C₅₋₁₆ spiro hydrocarbon rings, such as spiro[4.4]nonane, spiro[4.5]decane, and spirobicyclohexane.

Examples of the ring-assembly hydrocarbon ring include a ring-assembly hydrocarbon ring containing two or more C₅₋₁₂ cycloalkane rings, such as bicyclohexane.

Examples of the bridged cyclic hydrocarbon ring include bicyclic hydrocarbon rings, such as pinane, bornane, norpinane, norbornane, norbornene, bicycloheptane, bicycloheptene, bicyclooctane (such as bicyclo[2.2.2]octane and bicyclo[3.2.1]octane); tricyclic hydrocarbon rings, such as homobredane, adamantane, tricyclo[5.2.1.0^{2,6}]decane, and tricyclo[4.3.1.1^{2,5}]undecane; tetracyclic hydrocarbon rings, such as tetracyclo[4.4.0.1^{2,5}.1^{7,10}]dodecane, perhydro-1,4-methano-5,8-methanonaphthalene; and the like.

Examples of the fused cyclic hydrocarbon ring include fused rings in which a plurality of 5- to 8-membered cycloalkane rings are fused, such as perhydronaphthalene (decalin), perhydroanthracene, perhydrophenanthrene, perhydroacenaphthene, perhydrofluorene, and perhydroindene.

Examples of the bridged fused cyclic hydrocarbon ring include dimers of dienes (for example, dimers of cycloalkadienes, such as cyclopentadiene, cyclohexadiene, and cycloheptadiene) and hydrogenated products thereof.

Examples of the divalent aromatic hydrocarbon group include arylene groups having from 6 to 18 carbons, such as a phenylene group, a biphenylene group, and a naphthylene group.

The hydrocarbon group described above may have various substituents (e.g., halogen atoms, an oxo group, substituted oxy groups (e.g., alkoxy groups, aryloxy groups, aralkyloxy groups, and acyloxy groups), a carboxyl group, substituted oxycarbonyl groups (alkoxycarbonyl groups, aryloxycarbonyl groups, and aralkyloxycarbonyl groups), substituted or unsubstituted carbamoyl groups, a cyano group, a nitro group, substituted or unsubstituted amino groups, a sulfo group, and heterocyclic groups). The carboxyl group may be protected by a protective group that is commonly used in the field of organic synthesis. In addition, an aromatic or non-aromatic heterocyclic ring may be fused to a ring constituting the alicyclic hydrocarbon group or the aromatic hydrocarbon group.

Examples of the linking group include a carbonyl group (-CO-), an ether bond (-O-), a thioether bond (-S-), an ester bond (-COO-), an amide bond (-CONH-), and a carbonate bond (-OCOO-).

Examples of the heterocyclic ring constituting the divalent heterocyclic group include heterocyclic rings containing an oxygen atom as a heteroatom (e.g., 4-membered rings, such as an oxetane ring; 5-membered rings, such as a furan ring, a tetrahydrofuran ring, an oxazole ring, an isoxazole ring, and a γ-butyrolactone ring; 6-membered rings, such as a 4-oxo-4H-pyran ring, a tetrahydropyran ring, and a morpholine ring; fused rings, such as a benzofuran ring, an isobenzofuran ring, a 4-oxo-4H-chromene ring, a chroman ring, and an isochroman ring; and crosslinked rings, such as a 3-oxatricyclo[4.3.1.1^{4,8}]undecan-2-one ring and a 3-oxatricyclo[4.2.1.0^{4,8}]nonan-2-one ring), heterocyclic rings containing a sulfur atom as a heteroatom (e.g., 5-membered rings, such as a thiophene ring, a thiazole ring, an isothiazole ring, and a thiadiazole ring; 6-membered rings, such as a 4-oxo-4H-thiopyran ring; and fused rings, such as a benzothiophene ring), and heterocyclic rings containing a nitrogen atom as a heteroatom (e.g., 5-membered rings, such as a pyrrole ring, a pyrrolidine ring, a pyrazole ring, an imidazole ring, and a triazole ring; 6-membered rings, such as a pyridine ring, a pyridazine ring, a pyrimidine ring, a pyrazine ring, a piperidine ring, and a piperazine ring; and fused rings, such as an indole ring, an indoline ring, a quinoline ring, an acridine ring, a naphthryridine ring, a quinazoline ring, and a purine ring). In addition to the substituents that the hydrocarbon group may include, the heterocyclic group may include an alkyl group (for example, a C₁₋₄ alkyl group like a methyl group or an ethyl group), a cycloalkyl group, an aryl group (for example, a phenyl group or a naphthyl group), or the like. Examples of the divalent heterocyclic group include groups obtained by removing two hydrogen atoms from the heterocyclic ring structural formula described above.

Among these, R^{a} is preferably a divalent hydrocarbon group or a divalent group in which two or more hydrocarbon groups are bonded to each other through a linking group; particularly preferably a divalent aliphatic hydrocarbon group or a divalent group in which two or more aliphatic hydrocarbon groups are bonded to each other through a linking group; most preferably a straight-chain or branched alkylene group having from 1 to 18 carbons or a group in which two or more straight-chain or branched alkylene groups having from 1 to 18 carbons are bonded to each other through a linking group; and especially preferably a straight-chain or branched alkylene group having from 1 to 6 carbons or a group in which two or more straight-chain or branched alkylene groups having from 1 to 6 carbons are bonded to each other through a linking group. Furthermore, the linking group is preferably an ether bond.

The compound (i) preferably contains the compound (i-1) having one vinyl ether group and one hydroxy group and/or the compound (i-3) having one oxetanyl group and one hydroxy group from the viewpoint of forming a cured product having even higher hardness. In particular, the compound (i) preferably contains at least the compound (i-3).

The compound (i) preferably contains at least one type selected from the group consisting of compounds represented by Formulas (i-1-1) to (i-1-3) and (i-3-1) below, and particularly preferably contains at least the compound represented by Formula (i-3-1) below.

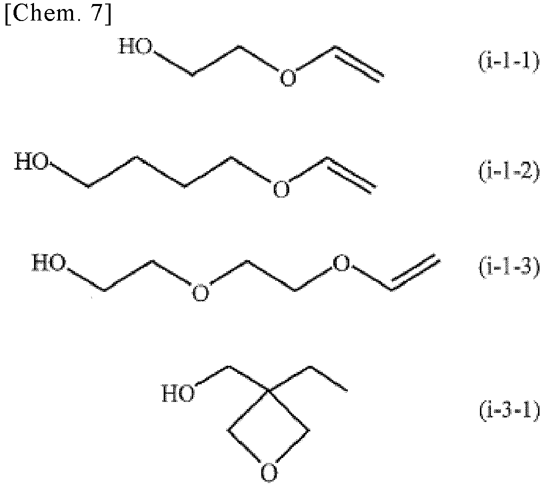

### Compound (b)

The compound (b) is a compound represented by Formula (b) below: 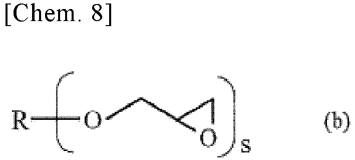 where R represents an s-valent straight-chain or branched saturated aliphatic hydrocarbon group or an s-valent group having two or more straight-chain or branched saturated aliphatic hydrocarbon groups bonded to each other through an ether bond, and s represents an integer of 2 or greater.

In the formula, s represents an integer of 2 or greater and is, for example, an integer of 2 to 6, preferably an integer of 2 to 4, particularly preferably an integer of 2 to 3, and especially preferably 2.

Among the s-valent straight-chain or branched saturated aliphatic hydrocarbon groups of R, examples of the divalent straight-chain or branched saturated aliphatic hydrocarbon group include straight-chain or branched alkylene groups having from 1 to 18 carbons (preferably from 1 to 10 carbons and particularly preferably from 3 to 6 carbons), such as a methylene group, a methyl methylene group, a dimethyl methylene group, an ethylene group, a propylene group, a trimethylene group, and a tetramethylene group. Furthermore, examples of the tri- or higher-valent straight-chain or branched saturated aliphatic hydrocarbon group include groups obtained by further removing (s-2) atoms of hydrogens from the divalent straight-chain or branched saturated aliphatic hydrocarbon group structural formula.

The total number of carbons in the group represented by R is, for example, from 1 to 20, preferably from 2 to 15, particularly preferably from 2 to 10, and most preferably from 3 to 8.

Among these, as the compound (b), at least one type of compounds selected from the group consisting of compounds represented by Formulas (b-1) to (b-5) below, trimethylolethane triglycidyl ether, pentaerythritol tetraglycidyl ether, glycerin triglycidyl ether, and dipentaerythritol hexaglycidyl ether is preferred. From the viewpoint of achieving a low viscosity and excellent coatability, at least one type selected from the group consisting of compounds represented by Formulas (b-1) to (b-5) below is particularly preferred, and at least one type selected from the group consisting of compounds represented by Formulas (b-1) to (b-4) below is most preferred.

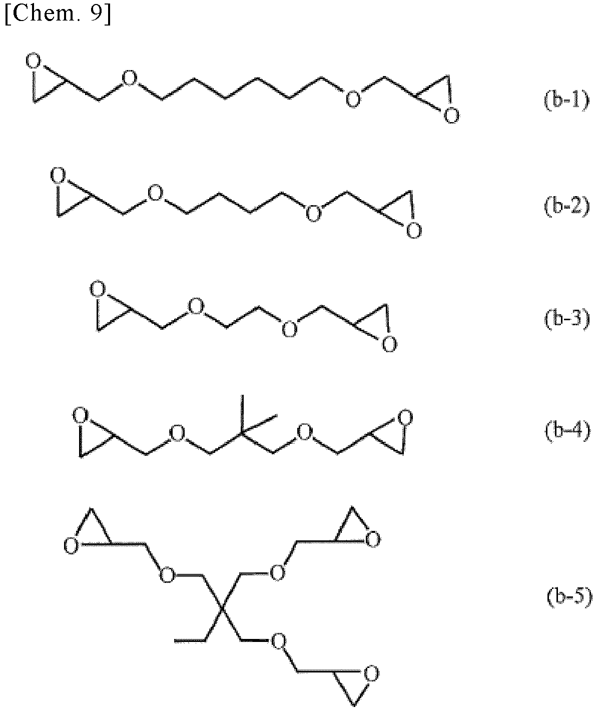

### Vinyl Ether Compound (A)

The adhesive agent (1) may contain, as the cationically polymerizable monomers, one type or two or more types of compounds having at least one vinyl ether group and having no hydroxy group in a molecule (in the present specification, also referred to as "vinyl ether compound (A)"), besides the compound (I) described above. The vinyl ether compound (A) may contain another cationically polymerizable group (e.g., an epoxy group, and an oxetanyl group) besides the vinyl ether group.

Examples of the vinyl ether compound (A) include compounds represented by Formula (a) below:

R^{c}-(O-CH=CH₂)ₜ (a)

where R^{c} represents a t-valent hydrocarbon group, t-valent heterocyclic group, or a t-valent group having these bonded to each other through a single bond or a linking group, and t represents an integer of 1 or greater.

t described above is an integer of 1 or greater and, for example, an integer from 1 to 10, preferably an integer from 1 to 5, and particularly preferably an integer from 2 to 5.

Examples of the t-valent hydrocarbon group and the t-valent heterocyclic group in R^{c} include t-valent groups corresponding to divalent hydrocarbon groups and divalent heterocyclic groups in R^{a}. Furthermore, the t-valent hydrocarbon group and the t-valent heterocyclic group may each have a substituent. Examples of the substituent include substituents that may include the divalent hydrocarbon groups and the divalent heterocyclic groups in R^{a}; and groups containing an epoxy group or an oxetanyl group. Furthermore, examples of the linking group include the same groups that are exemplified for the linking group in R^{a}. Among these, R^{c} is preferably a t-valent group having an alicyclic or heterocyclic skeleton.

As the vinyl ether compound (A), compounds represented by Formulae (a-1) and (a-2) below, cyclohexyl dimethanol monovinyl ether, cyclohexyl vinyl ether, cyclohexylmethyl vinyl ether, cyclohexylethyl vinyl ether, menthyl vinyl ether, tetrahydrofurfuryl vinyl ether, norbornenyl vinyl ether, 1 -adamantyl vinyl ether, 2-adamantyl vinyl ether, 1,4-cyclohexanediol divinyl ether, and 1,4-cyclohexanedimethanol divinyl ether are preferred.

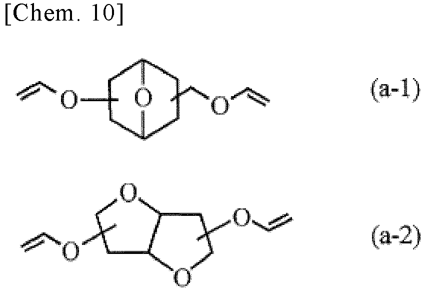

### Epoxy Compound (B)

The adhesive agent (1) may contain, as the cationically polymerizable monomers, one type or two or more types of compounds having at least one epoxy group and having no hydroxy group in a molecule (except the compound having a vinyl ether group; in the present specification, also referred to as "epoxy compound (B)"), besides the compound (I) and the compound (b) described above. The epoxy compound (B) may contain another cationically polymerizable group (e.g., an oxetanyl group) besides the epoxy group.

The epoxy group includes a group, such as a cyclohexene oxide group represented by Formula (e-1) below (which may be hereinafter referred to as an "alicyclic epoxy group") constituted of adjacent two carbon atoms constituting an alicyclic ring (for example, a 3- to 8-membered alicyclic ring) and an oxygen atom or includes an ethylene oxide group represented by Formula (e-2) below. In the formula below, R¹ represents a hydrogen atom or a C₁₋₃ alkyl group.

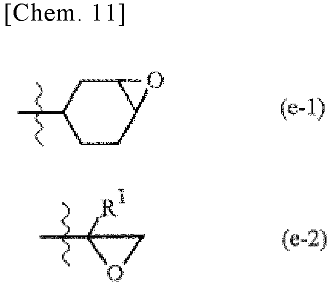

Among these, the epoxy compound (B) is preferably a compound having two or more epoxy groups in a molecule from the viewpoint of excellent curability. In particular, at least one type of compounds selected from the group consisting of compounds having two or more alicyclic epoxy groups in a molecule, compounds having two or more ethylene oxide groups in a molecule, and compounds having one or more alicyclic epoxy group and one or more ethylene oxide group in a molecule is preferred.

As the compound having two or more alicyclic epoxy groups in a molecule, a compound represented by Formula (b') is preferred.

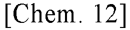

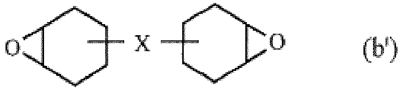

In Formula (b') above, X represents a single bond or a linking group. Examples of the linking group include a divalent hydrocarbon group, an alkenylene group in which some or all of the carbon-carbon double bonds are epoxidized, a carbonyl group (-CO-), an ether bond (-O-), an ester bond (-COO-), a carbonate group (-O-CO-O-), an amide group (-CONH-), a group in which a plurality of these are linked, and the like.

Examples of the divalent hydrocarbon group include linear or branched alkylene groups having from 1 to 18 carbons and divalent alicyclic hydrocarbon groups having from 3 to 18 carbons. Examples of the linear or branched alkylene group having from 1 to 18 carbons include a methylene group, a methyl methylene group, a dimethyl methylene group, an ethylene group, a propylene group, and a trimethylene group. Examples of the divalent alicyclic hydrocarbon group having from 3 to 18 carbons include cycloalkylene groups (including cycloalkylidene groups), such as a 1,2-cyclopentylene group, a 1,3-cyclopentylene group, a cyclopentylidene group, a 1,2-cyclohexylene group, a 1,3-cyclohexylene group, a 1,4-cyclohexylene group, and a cyclohexylidene group.

Examples of the alkenylene group in the alkenylene group in which some or all of the carbon-carbon double bonds are epoxidized (which may be referred to as "epoxidized alkenylene group") include straight-chain or branched alkenylene groups having from 2 to 8 carbons, such as a vinylene group, a propenylene group, a 1-butenylene group, a 2-butenylene group, a butadienylene group, a pentenylene group, a hexenylene group, a heptenylene group, and an octenylene group; and the like. In particular, the epoxidized alkenylene group is preferably an alkenylene group in which all of the carbon-carbon double bonds are epoxidized; and more preferably an alkenylene group having from 2 to 4 carbons in which all of the carbon-carbon double bonds are epoxidized.

In the cyclohexene oxide group of Formula (b') above, a substituent may be bonded. Examples of the substituent include halogen atoms, C₁₋₁₀ alkyl groups, C₁₋₁₀ alkoxy groups, C₂₋₁₀ alkenyloxy groups, C₆₋₁₄ aryloxy groups, C₇₋₁₈ aralkyloxy groups, C₁₋₁₀ acyloxy groups, C₁₋₁₀ alkoxycarbonyl groups, C₆₋₁₄ aryloxycarbonyl groups, C₇₋₁₈ aralkyloxycarbonyl groups, epoxy group-containing groups, oxetanyl group-containing groups, C₁₋₁₀ acyl groups, isocyanate groups, sulfo groups, carbamoyl groups, oxo groups, and the like.

Representative examples of the compounds represented by Formula (b') above include (3,4,3',4'-diepoxy)bicyclohexyl, bis(3,4-epoxycyclohexylmethyl) ether, 1,2-epoxy-1,2-bis(3,4-epoxycyclohexan-1-yl)ethane, 2,2-bis(3,4-epoxycyclohexan-1-yl)propane, 1,2-bis(3,4-epoxycyclohexan-1-yl)ethane, and compounds represented by Formulae (b'-1) to (b'-8) below. Note that L in Formula (b'-5) represents an alkylene group having from 1 to 8 carbons (e.g., a straight-chain or branched alkylene group having from 1 to 3 carbons, such as a methylene group, an ethylene group, a propylene group, and an isopropylene group). Furthermore, n¹ and n² in Formulae (b'-5) and (b'-7) each represent an integer of 1 to 30.

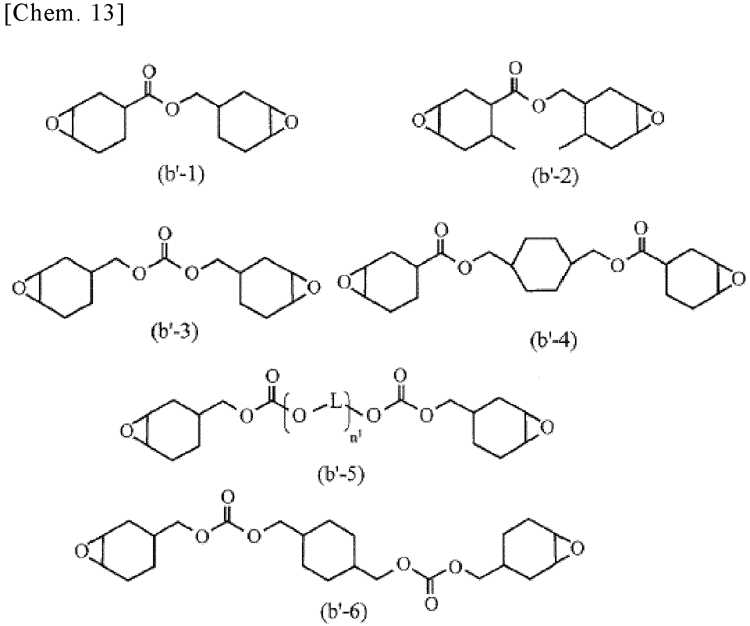

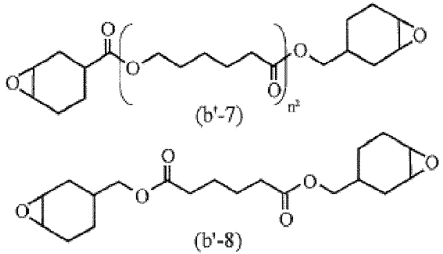

The compound having two or more alicyclic epoxy groups in a molecule further includes compounds represented by Formulas (b'-9) and (b'-10). In Formulae (b'-9) and (b-10'), n³ to n⁸ may be the same or different and each represent an integer from 1 to 30.

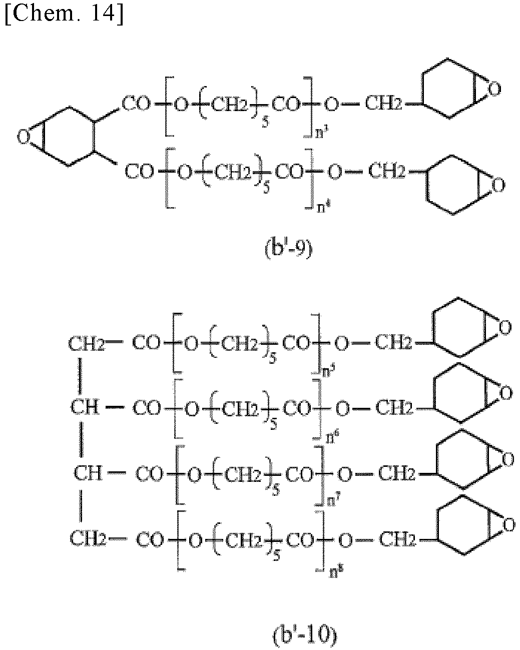

Examples of the compound having two or more ethylene oxide groups in a molecule include alicyclic glycidyl ethers, such as hydrogenated bisphenol A-type diglycidyl ether, hydrogenated bisphenol F-type diglycidyl ether, hydrogenated biphenol-type diglycidyl ether, hydrogenated phenol novolac-type diglycidyl ether, and hydrogenated cresol novolac-type diglycidyl ether; aromatic glycidyl ethers, such as bisphenol A-type diglycidyl ether, bisphenol F-type diglycidyl ether, biphenol-type diglycidyl ether, phenol novolac-type diglycidyl ether, and cresol novolac-type diglycidyl ether; and compounds represented by Formula (b") below.

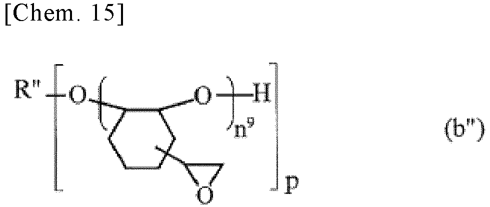

In Formula (b"), R" represents a group (p-valent organic group) from which p groups of hydroxy groups (-OH) are removed from a structural formula of p-valent alcohol, and p and n⁹ each represent a natural number. Examples of the p-valent alcohol [R"(OH)ₚ] include polyhydric alcohols (polyhydric alcohols having from 1 to 15 carbons and the like), such as 2,2-bis(hydroxymethyl)-1-butanol. p is preferably from 1 to 6, and n⁹ is preferably from 1 to 30. In the case where p is 2 or greater, n⁹ moieties of a group within

[] (within the outer square brackets) may be the same or different. Specific examples of the compound represented by Formula (b") above include 1,2-epoxy-4-(2-oxiranyl)cyclohexane adduct of 2,2-bis(hydroxymethyl)-1-butanol (e.g., trade name: "EHPE3150" (available from Daicel Corporation)) and the like.

Examples of the compound having one or more alicyclic epoxy groups and one or more ethylene oxide groups in a molecule include 1,2:8,9-diepoxylimonene.

The epoxy compound (B) preferably includes the compound having two or more alicyclic epoxy groups in a molecule (particularly, the compound represented by Formula (b')) from the viewpoints of achieving rapid curability and forming a cured product having high hardness.

### Oxetane Compound (C)

The adhesive agent (1) may contain, as the cationically polymerizable monomers, one type or two or more types of compounds having at least one oxetanyl group and having no hydroxy group in a molecule (except the compound having a vinyl ether group and/or an epoxy group; in the present specification, also referred to as "oxetane compound (C)"), besides the compound (I) described above.

The oxetane compound (C) is, for example, represented by Formula (c): 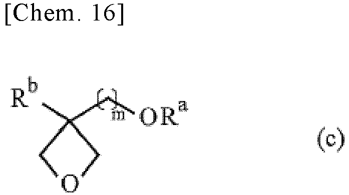 where R^{a} represents a monovalent organic group, R^{b} represents a hydrogen atom or an ethyl group, and m represents an integer of 0 or greater.

The monovalent organic group in the R^{a} includes a monovalent hydrocarbon group, a monovalent heterocyclic group, a substituted oxycarbonyl group (such as an alkoxycarbonyl group, an aryloxycarbonyl group, an aralkyloxycarbonyl group, and a cycloalkyloxycarbonyl group), a substituted carbamoyl group (such as an N-alkylcarbamoyl group and an N-arylcarbamoyl group), an acyl group (an aliphatic acyl group, such as an acetyl group; and an aromatic acyl group, such as a benzoyl group), and a monovalent group in which two or more of these groups are bonded via a single bond or a linking group.

Examples of the monovalent hydrocarbon group and the monovalent heterocyclic group include monovalent groups corresponding to divalent hydrocarbon groups and divalent heterocyclic groups of R^{a} described above. Examples of the linking group include the same groups that are exemplified for the linking group in R^{a} described above. These groups may have a substituent, and examples of the substituent include the same groups that are exemplified for the substituent that may include the hydrocarbon group in R^{a}.

The above m represents an integer of 0 or greater and is, for example, an integer of 0 to 20 and preferably an integer of 0 to 1.

Among these, as the oxetane compound (C), use of the compound having two or more oxetanyl groups in a molecule is preferred from the viewpoints of achieving rapid curability and obtaining a cured product having high hardness, and for example, compounds represented by Formula (c-1), and compounds represented by Formula (c-2) are preferred. In an embodiment of the present invention, for example, a commercially available product, such as "ARON OXETANE OXT-221" and "ARON OXETANE OXT-121" (both available from ToaGosei Co., Ltd.), can be used.

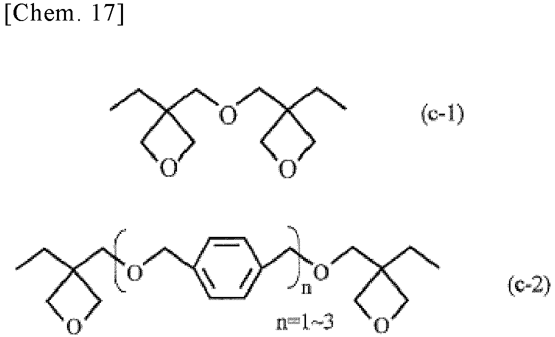

The adhesive agent (1) contains, for example, from 50 to 99.9 wt.% (preferably from 70 to 98 wt.%) of the cationically polymerizable monomers relative to the total amount (100 wt.%) of the adhesive agent. The adhesive agent (1) contains, as the cationically polymerizable monomers, at least the compound (I) and the compound (b) and may further contain one type or two or more types selected from the group consisting of the vinyl ether compound (A), the epoxy compound (B), and the oxetane compound (C).

The content of the compound (I) is preferably 10 wt.% or greater (e.g., from 10 to 65 wt.%) of the total amount of the cationically polymerizable monomers contained in the adhesive agent (1). In particular, from the viewpoint of obtaining a cured product having excellent adhesion to resin films, the lower limit thereof is preferably 25 wt.%, more preferably 30 wt.%, particularly preferably 33 wt.%, and most preferably 35 wt.%. Furthermore, from the viewpoint of obtaining a cured product having high hardness, the upper limit thereof is preferably 55 wt.%, particularly preferably 50 wt.%, and most preferably 45 wt.%. The content of the compound (I) lower than the range described above tends to lower the adhesion to glass.

The content of the compound (i-1-1) having at least one vinyl ether group and at least one hydroxy group and the compound (i-3-1) having at least one oxetanyl group and at least one hydroxy group is preferably 25 wt.% or greater (e.g., from 25 to 65 wt.%) relative to the total amount of the cationically polymerizable monomers contained in the adhesive agent (1) from the viewpoints of achieving excellent adhesion to resin films and obtaining a cured product having high hardness. In particular, from the viewpoint of excellent curability, the content is preferably 25 wt.% or greater but less than 60 wt.%, most preferably from 25 to 55 wt.%, and especially preferably from 25 to 45 wt.%.

The content of the compound (i-1-1) having one vinyl ether group and one hydroxy group is, for example, 30 wt.% or less, preferably 25 wt.% or less, and particularly preferably 18 wt.% or less, relative to the total amount of the cationically polymerizable monomers contained in the adhesive agent (1).

The content of the compound (i-3-1) having one oxetanyl group and one hydroxy group is preferably 15 wt.% or greater, more preferably 20 wt.% or greater, and particularly preferably 25 wt.% or greater, relative to the total amount of the cationically polymerizable monomers contained in the adhesive agent (1) from the viewpoints of achieving excellent adhesion to resin films and obtaining a cured product having high hardness. Furthermore, from the viewpoint of curability, the upper limit of the content is, for example, 55 wt.%, preferably 45 wt.%, and particularly preferably 40 wt.%.

The content of the compound (b) is preferably 5 wt.% or greater relative to the total amount of the cationically polymerizable monomers contained in the adhesive agent (1). From the viewpoints of achieving rapid curability and obtaining a cured product having high hardness and excellent adhesion to glass, the content is more preferably from 5 to 45 wt.%, particularly preferably from 12 to 40 wt.%, and most preferably from 18 to 30 wt.%. The content in the compound (b) lower than the range described above tends to deteriorate crack resistance of the resulting cured product, and the cured product tends to be brittle.

The weight ratio of the compound (I)/the compound (b) is, for example, 0.5 or greater, preferably 1.0 or greater, particularly preferably 1.1 or greater, and most preferably 1.3 or greater, from the viewpoint of obtaining a cured product having excellent adhesion to glass. Furthermore, the upper limit of the weight ratio is, for example, 6.5, preferably 5.5, particularly preferably 3.0, most preferably 2.5, and especially preferably 2.0.

The content of the compound having two or more cationically polymerizable groups selected from the group consisting of a vinyl ether group, an epoxy group, and an oxetanyl group in a molecule, the compound being other than the compound (I) and the compound (b), is, for example, 15 wt.% or greater, preferably 20 wt.% or greater, particularly preferably 25 wt.% or greater, and most preferably 30 wt.% or greater, relative to the total amount of the cationically polymerizable monomers contained in the adhesive agent (1) from the viewpoint of curability. Note that the upper limit of the content is, for example, 55 wt.% and preferably 50 wt.%, from the viewpoint of obtaining a cured product having high hardness and excellent adhesion to glass.

The content of the compound having two or more epoxy groups and having no hydroxy group in a molecule (preferably a compound having two or more alicyclic epoxy groups in a molecule and particularly preferably a compound represented by Formula (b')), the compound being other than the compound (b), is preferably 10 wt.% or greater, more preferably 20 wt.% or greater, and particularly preferably 25 wt.% or greater, relative to the total amount of the cationically polymerizable monomers contained in the adhesive agent (1) from the viewpoints of achieving rapid curability and obtaining a cured product having high hardness. Note that the upper limit of the content is, for example, 50 wt.%, preferably 45 wt.%, and particularly preferably 43 wt.%, from the viewpoint of obtaining a cured product having high hardness and excellent adhesion to glass.

The content of the compound having two or more vinyl ether groups and having no hydroxy group in a molecule is, for example, 20 wt.% or less and preferably 15 wt.% or less, relative to the total amount of the cationically polymerizable monomers contained in the adhesive agent (1).

The content of the compound having two or more oxetanyl groups and having no hydroxy group in a molecule is, for example, 20 wt.% or less and preferably 15 wt.% or less, relative to the total amount of the cationically polymerizable monomers contained in the adhesive agent (1).

The content of the compound having one cationically polymerizable group selected from the group consisting of a vinyl ether group, an epoxy group, and an oxetanyl group and having no hydroxy group in a molecule is preferably less than 30 wt.%, more preferably 20 wt.% or less, particularly preferably 10 wt.% or less, most preferably 5 wt.% or less, and especially preferably 1 wt.% or less, relative to the total amount of the cationically polymerizable monomers contained in the adhesive agent (1) from the viewpoint of curability.

The radical curable adhesive agent contains a radical polymerizable monomer and a curing catalyst.

### Radically Polymerizable Monomer

Examples of the radical polymerizable monomer include olefins (e.g., chain-like olefins, such as ethylene, propylene, 1-butene, and butadiene (especially C₂₋₁₂ alkene); and cyclic olefins, such as cyclopentene, cyclohexene, cycloheptene, norbornene, 5-methyl-2-norbornene, and tetracyclododecene), aromatic vinyl compounds (e.g., C₆₋₁₄ aromatic vinyl compounds, such as styrene, vinyl toluene, α-methylstyrene, 1-propenylbenzene, 1-vinylnaphthalene, 2-vinylnaphthalene, 3-vinylpyridine, 3-vinylfuran, 3-vinylthiophene, and 3-vinylquinoline), (meth)acrylates (e.g., C₁₋₁₀ alkyl acrylates, such as ethyl acrylate, butyl acrylate, isobutyl acrylate, t-butyl acrylate, and 2-ethylhexyl acrylate, and methacrylates corresponding to these), urethane (meth)acrylates (e.g., reaction products of a polyisocyanate compound, such as 2,4-tolylene diisocyanate, 1,3-xylene diisocyanate, xylylene diisocyanate, 1,5-naphthalene diisocyanate, diphenylmethane diisocyanate, 4,4'-diphenylmethane diisocyanate, isophorone diisocyanate, 1,6-hexamethylene diisocyanate, dicyclohexylmethane diisocyanate, or 2,2,4-trimethylhexamethylene diisocyanate, and a (meth)acrylic monomer having an active hydrogen, such as 2-hydroxyethyl (meth)acrylate, 2-hydroxypropyl (meth)acrylate, ethylene glycol mono(meth)acrylate, propylene glycol mono(meth)acrylate, 2-hydroxy-3-methoxypropyl (meth)acrylate, pentaerythritol tri(meth)acrylate, N-methylol (meth)acrylamide, or N-hydroxy (meth)acrylamide), vinyl esters (e.g., C₁₋₁₆ aliphatic vinyl esters, such as vinyl acetate, vinyl propionate, vinyl caprylate, and vinyl caproate), maleates or fumarates (e.g., di-C₁₋₁₀ alkyl maleates, such as diethyl maleate, dibutyl maleate, dioctyl maleate, and 2-ethylhexyl maleate, and fumarates corresponding to these), carboxyl group-containing monomers (e.g., monocarboxylic acids, such as (meth)acrylic acid and itaconic acid; polyvalent carboxylic acids, such as maleic anhydride, maleic acid, and fumaric acid, or acid anhydrides thereof; and monoalkyl esters of the polyvalent carboxylic acid (e.g., C₁₋₁₆ alkyl esters, such as methyl ester, ethyl ester, propyl ester, butyl ester, hexyl ester, octyl ester, and lauryl ester)), indenes (e.g., alkyl indenes, such as indene, methylindene, ethylindene, and dimethylindene; and halogenated indenes, such as chloroindene and bromoindene), and the like. One type of these can be used alone, or two or more types of these can be used in combination.

The thermoplastic adhesive agent contains at least one type of thermoplastic resin.

Examples of the thermoplastic resin include acrylic polymers containing a (meth)acrylic acid or ester thereof as a monomer, such as homo or copolymers of (meth)acrylates, (meth)acryl-urethane copolymers (especially, (meth)acryl-urethane graft copolymers), styrene-(meth)acrylate copolymers, vinyl acetate-(meth)acrylate copolymers, ethylene-(meth)acrylate copolymers, ethylene-(meth)acrylic acid copolymers, (meth)acrylate-(meth)acrylic acid copolymers, styrene-acrylonitrile-(meth)acrylate copolymers, styrene-(meth)acrylate-(meth)acrylic acid copolymers, styrene-acrylonitrile-(meth)acrylate-(meth)acrylic acid copolymers, ethylene-vinyl acetate-(meth)acrylate copolymers, vinyl pyrrolidone-(meth)acrylate copolymers, and styrene-butadiene-(meth)acrylic acid copolymers; vinyl acetate-based polymers containing vinyl acetate as a monomer, such as vinyl acetate resins and ethylene-vinyl acetate copolymers; synthetic rubbers, such as styrene-butadiene copolymers, isobutylene resins, isobutylene-isoprene copolymers, butadiene resins, styrene-isoprene copolymers, and acrylonitrile-butadiene copolymers; natural rubbers; ethylene-vinyl chloride copolymers, vinyl chloride-vinylidene chloride copolymers, vinyl pyrrolidone-styrene copolymers, chlorinated propylene resins, urethane resins, ethyl cellulose, and the like.

As the adhesive layer, an adhesive layer formed from a cured product of an acrylic urethane-based adhesive agent (2) containing urethane (meth)acrylate or (co)polymers thereof is preferred. In particular, an adhesive layer formed from a cured product of the adhesive agent (2) and having a storage modulus at 20°C of, for example, 10 MPa or greater (preferably 50 MPa or greater, more preferably 80 MPa or greater, and particularly preferably 120 MPa or greater) measured by a dynamic viscoelasticity measuring device is preferred from the viewpoint of obtaining a laminated body having excellent bending resistance.

Furthermore, as the adhesive layer, an adhesive layer formed from a cured product of the vinyl acetate-based adhesive agent (3) containing a vinyl acetate-based polymer (especially, an ethylene-vinyl acetate copolymer) is preferred. In particular, an adhesive layer formed from a cured product of the adhesive agent (3) and having a glass transition temperature (Tg) of, for example, 5°C or lower (preferably lower than -5°C and particularly preferably - 10°C or lower; the lower limit of the glass transition temperature being, for example, -30°C and preferably -20°C) measured by a dynamic viscoelasticity measuring device is preferred from the viewpoint of obtaining a laminated body having excellent bending resistance.

### Curing Catalyst

The curing catalyst includes a well-known or commonly used photocationic polymerization initiator and a photoradical polymerization initiator. The cationic curable adhesive agent preferably contains at least a photocationic polymerization initiator as a curing catalyst and particularly preferably contains both a photocationic polymerization initiator and a photoradical polymerization initiator from the viewpoints of enabling the curing reaction of the adhesive agent to further efficiently proceed and obtaining a cured product having especially high hardness. Furthermore, in the radical curable adhesive agent, at least a photoradical polymerization initiator is preferably contained as a curing catalyst.

Examples of the photocationic polymerization initiator include diazonium salt compounds, iodonium salt compounds, sulfonium salt compounds, phosphonium salt compounds, selenium salt compounds, oxonium salt compounds, ammonium salt compounds, and bromine salt compounds. In an embodiment of the present invention, a commercially available product can be preferably used, for example, such as those under the trade names "CPI-101A", "CPI-100P", and "CPI-110P" (the above available from San-Apro Ltd.), the trade names "CYRACURE UVI-6990" and "CYRACURE UVI-6992" (the above available from Dow Chemical Co., Ltd.), the trade name "UVACURE 1590" (available from Daicel-Allnex Ltd.), the trade names "CD-1010", "CD-1011", and "CD-1012" (the above available from Sartomer USA), the trade name "Irgacure-264" (available from BASF), the trade name "CIT-1682" (available from Nippon Soda Co., Ltd.), and the trade name "PHOTOINITIATOR 2074" (available from Rhodia Japan Ltd.). One type of these can be used alone, or two or more types of these can be used in combination.

Examples of the photoradical polymerization initiator include 1-hydroxycyclohexyl phenyl ketone, 2-hydroxy-2-methyl-1-phenylpropan-1-one, diethoxyacetophenone, 1-(4-isopropylphenyl)-2-hydroxy-2-methylpropan-1-one, 1-(4-dodecylphenyl)-2-hydroxy-2-methylpropan-1-one, 4-(2-hydroxyethoxy)-phenyl(2-hydroxy-2-propyl)ketone, 2-methyl-1-[4-(methylthio)phenyl]-2-morpholinopropan-1-one, benzoin, benzoin methyl ether, benzoin ethyl ether, benzoin isopropyl ether, benzoin-n-butyl ether, benzoin phenyl ether, benzyl dimethyl ketal, benzophenone, benzoylbenzoic acid, methyl benzoylbenzoate, 4-phenylbenzophenone-4-methoxybenzophenone, thioxanthone, 2-chlorothioxanthone, 2-methylthioxanthone, 2,4-dimethylthioxanthone, isopropylthioxanthone, 2,4-dichlorothioxanthone, 2,4-diethylthioxanthone, 2,4-diisopropylthioxanthone, 2,4,6-trimethylbenzoyldiphenylphosphine oxide, methyl phenylglyoxylate, benzyl, and camphorquinone. In an embodiment of the present invention, a commercially available product can be preferably used, for example, such as those under the trade names "Irgacure-184", "Irgacure-127", "Irgacure-149", "Irgacure-261", "Irgacure-369", "Irgacure-500", "Irgacure-651", "Irgacure-754", "Irgacure-784", "Irgacure-819", "Irgacure-907", "Irgacure-1116", "Irgacure-1173", "Irgacure-1664", "Irgacure-1700", "Irgacure-1800", "Irgacure-1850", "Irgacure-2959", "Irgacure-4043", "Darocur-1173", and "Darocur-MBF" (available from BASF). One type of these can be used alone, or two or more types of these can be used in combination.

The cationic curable adhesive agent preferably uses a photocationic polymerization initiator as a curing catalyst, and the used amount thereof is, for example, from 0.1 to 20 parts by weight, preferably from 0.5 to 20 parts by weight, and particularly preferably from 1 to 10 parts by weight, per 100 parts by weight of the cationically polymerizable monomers.

Furthermore, in the case where the photoradical polymerization initiator is used together with the photocationic polymerization initiator as curing catalysts, the used amount of the photoradical polymerization initiator is preferably from 0.1 to 5 parts by weight, particularly preferably from 0.5 to 3 parts by weight, and most preferably from 0.5 to 2 parts by weight, per 100 parts by weight of the cationically polymerizable monomers.

The radical curable adhesive agent preferably uses a photoradical polymerization initiator as a curing catalyst, and the used amount thereof is, for example, from 0.1 to 20 parts by weight, preferably from 0.5 to 20 parts by weight, and particularly preferably from 1 to 10 parts by weight, per 100 parts by weight of the radically polymerizable monomers.

The adhesive agent may further contain a solvent; however, a solventless system, i.e., blending no solvent, is preferred from the viewpoints of enhancing dryness, being applicable to a resin film that is easily deteriorated by a solvent, and prevention of odor generation due to volatilization of a solvent. The content of the solvent is, for example, 10 wt.% or less, preferably 5 wt.% or less, and particularly preferably 1 wt.% or less, relative to the total amount (100 wt.%) of the adhesive agent.

In the case where the adhesive agent is a cationic or radical curable adhesive agent, another component may be optionally contained besides the monomers and the curing catalyst. Examples of such another component include known and commonly used sensitizers (such as an acridine compound, benzoflavins, perylenes, anthracenes, thioxanthone compounds, and laser dyes), sensitization auxiliary agents, antioxidants, stabilizers such as amines, and the like. In particular, in the case where the adhesive agent is used for application where curing is performed by irradiation with UV-LED, a sensitizer and optionally a sensitization auxiliary agent are preferably contained from the viewpoint of enhancing curability by improving the ultraviolet light absorption of the curing catalyst. The content of these (the total amount in the case where two or more types are contained) is, for example, from 0.05 to 10 parts by weight, and preferably from 0.1 to 5 parts by weight, per 100 parts by weight of the monomers.

Furthermore, as sensitizers, a compound represented by Formula (d-1) below and a compound represented by Formula (d-2) below are preferably used in combination from the viewpoint of being able to suppress coloration of the resulting cured product to an extremely low level. A ratio of these compounds combined (the compound represented by Formula (d-1)/the compound represented by Formula (d-2); weight ratio) is, for example, from 0.01 to 1.0, preferably from 0.1 to 0.5, and particularly preferably from 0.2 to 0.5. In addition, as the compound represented by Formula (d-1) below, for example, the trade name "Anthracure UVS-1331" (available from Kawasaki Kasei Chemicals Ltd.) can be used. Furthermore, as the compound represented by Formula (d-2) below, for example, the trade name "Anthracure UVS-581" (available from Kawasaki Kasei Chemicals Ltd.) can be used.

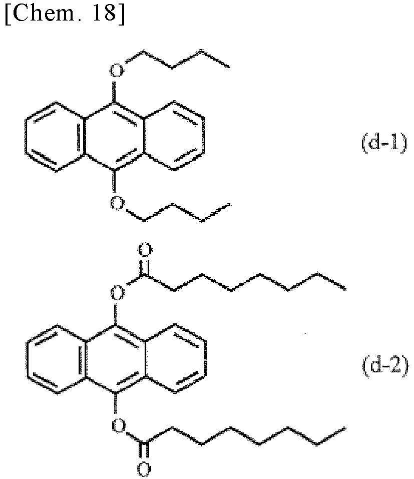

The surface tension of the adhesive agent (at 30°C and 1 atm) is, for example, preferably from 10 to 50 mN/m. The viscosity of the adhesive agent (at 25°C and shear rate of 100 (1/s)) is preferably from 1 to 1000 mPa·s, more preferably from 5 to 500 mPa·s, particularly preferably from 10 to 100 mPa·s, most preferably from 10 to 50 mPa·s, and especially preferably from 10 to 30 mPa·s, from the viewpoints of achieving excellent flowability and achieving excellent dischargeability in the case where coating is performed by using an inkjet printer or the like.

Note that the surface tension of the adhesive agent can be measured by Wilhelmy method (plate method), for example, using a high-precision surface tension meter "DY-700" (available from Kyowa Interface Science Co., Ltd.).

The laminated body according to an embodiment of the present invention can be produced by adhering the glass plate and the resin film with the adhesive agent and then curing the adhesive agent.

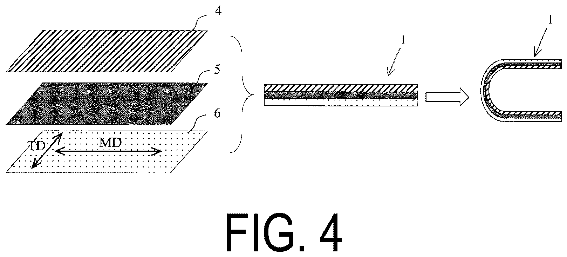

In the production process of the laminated body (in more detail, the laminated body having a bending function) according to an embodiment of the present invention, when the resin film is laminated on the glass plate, lamination is preferably performed by adjusting the adhering directions in a manner that an MD direction of the resin film is along a bending direction of the laminated body (or a bending direction that exhibits excellent bending resistance) or is in substantially parallel with the bending direction of the laminated body (crossing angle of the MD direction of the resin film and the bending direction of the laminated body is, for example, 30° or less, preferably 20° or less, particularly 10° or less, and most preferably 5° or less); or in a manner that the MD direction of the resin film substantially perpendicularly crosses a folded line formed in the case where the laminated body is folded in the bending direction (crossing angle of the MD direction of the resin film and the folded line is, for example, from 60 to 120°, preferably from 70 to 110°, particularly preferably from 80 to 100°, and most preferably 85 to 95°), from the viewpoint of obtaining a laminated body having especially excellent bending resistance (see FIG. 4). Note that the MD direction is a direction that a molten resin flows during production of the resin film by injection molding and has better mechanical strength compared to a TD direction (a direction perpendicular to the MD direction, width direction). The MD direction and the TD direction of the resin film can be confirmed by an orientation direction of birefringence measured by, for example, using a two-dimensional birefringence measurement device (PA-100, available from Photonic Lattice KK).

Therefore, the laminated body according to an embodiment of the present invention preferably has the bending resistance determined by the following test of 10 or greater (more preferably 100 or greater, particularly preferably 1000 or greater, even more preferably 2000 or greater, and most preferably 10000 or greater).

Bending Resistance Test:
In the case where a set of operation includes bending a laminated body for 180° from a state where the laminated body is stretched, in a direction that is along the MD direction of the resin film and in a direction that makes a surface of a glass plate concave and a bending radius 3 mm and then stretching the laminated body again, an index of the bending resistance is the number of sets of the operation until the laminated body cracks when the operation was performed at a rate of 43 sets per minute.

As the glass plate, use of a glass plate having a minimum bending radius of 3 mm or less (that is, a glass plate that can be folded at least once until the bending radius becomes 3 mm or less) is preferred from the viewpoint of efficiently obtaining a laminated body having excellent bending resistance. A glass plate having a minimum bending radius of greater than 3 mm often has small scratches that cannot be visually observed on a surface or an edge of the glass, and if such a glass plate is used, the resulting laminated body tends to have insufficient bending resistance. However, by the measurement of the minimum bending radius, applicability of the glass plate can be instantly and significantly easily determined, and operating efficiency and production yield can be enhanced.

The method of coating the adhesive agent is not particularly limited, and examples thereof include printing methods, coating methods, and the like. Specific examples thereof include screen printing methods, mask printing methods, offset printing methods, inkjet printing methods, flexographic printing methods, gravure printing methods, squeegee printing methods, silk screen printing methods, stamping, dispensing, spraying, brush coating, and the like.

Curing of the adhesive agent can be performed by a method applicable for the type of the adhesive agent. For example, in the case where an ultraviolet curable adhesive agent is used as the adhesive agent, curing can be performed by irradiation with ultraviolet light. In the case where a thermoplastic adhesive agent is used as the adhesive agent, curing (or solidifying) can be performed by cooling the adhesive agent that had been softened by heating.

Ultraviolet light sources, for example, such as a UV-LED; a mercury lamp, such as a low-, medium-, and high-pressure mercury lamps; a mercury-xenon lamp; a metal halide lamp; a tungsten lamp; an arc lamp; an excimer lamp; an excimer laser; a semiconductor laser; a YAG laser; a laser system combining a laser and a non-linear optical crystal; and a high-frequency induced ultraviolet light generating device; can be used. The quantity (integrated irradiance) of the ultraviolet light for irradiation is, for example, from 10 to 5000 mJ/cm².

Furthermore, heat treatment can be performed in addition to the ultraviolet light irradiation. The heat treatment can further improve the degree of cure. When heat treatment is performed, the heating temperature is from approximately 40 to 200°C, and the heating time is from approximately 1 minute to 15 hours. In addition, the degree of cure can also be improved by allowing the composition to stand at room temperature (20°C) for approximately 1 to 48 hours after the ultraviolet irradiation.

### Component for Flexible Device

The component for flexible devices (or part for flexible devices) according to an embodiment of the present invention has the laminated body as its structural component.

Examples of the component for flexible devices include displays (e.g., displays used for touch screens, wearable terminals, organic EL displays, and the like), protective films, barrier films, TFT substrates, and the like. Since the component for flexible devices according to an embodiment of the present invention has the laminated body having excellent bending resistance, the laminated body does not crack even when bending-stretching is repeated and has excellent reliability. Furthermore, displays and protective films having the laminated body with excellent transparency achieves excellent visibility.

### Flexible Device

The flexible device according to an embodiment of the present invention has the laminated body as its structural component.

Examples of the flexible device include personal digital assistances, such as smartphones, tablet computers, and wearable terminals, and the like. Since the flexible device according to an embodiment of the present invention has the laminated body having excellent bending resistance, the laminated body does not crack even when bending-stretching is repeated and has excellent reliability. Furthermore, personal digital assistances having the laminated body with excellent transparency achieves excellent visibility.

### Examples

Hereinafter, the present invention will be described more specifically with reference to examples, however, the present invention is not limited by these examples.

### Example 1 (Preparation of Adhesive Agent)

Each component was mixed in accordance with the formulation described in Table 1 (unit: part by weight) to obtain an adhesive agent. The viscosity of the obtained adhesive agent at 25°C and the shear rate of 100 (1/s) was measured by using an E-type viscometer (trade name "Viscometer TV-25", available from Toki Sangyo Co., Ltd.). The viscosity was 22.6 mPa·s.

### Examples of 2 to 30 and Comparative Examples 1 to 3 (Preparation of Adhesive Agent)

Each adhesive agent was obtained in the same manner as in Example 1 except for changing the formulation to the ones shown in Table 1 (unit: part by weight).

### Evaluation of Adhesion

The adhesive agent obtained in each of Examples and Comparative Examples was applied on a glass plate (trade name "S9112", available from Matsunami Glass Ind., Ltd.) (coating thickness: 5 µm) and irradiated with light of 365 nm by using an LED irradiator as a light source in the air atmosphere to obtain a cured product/glass plate laminated body.

The obtained laminates were subjected to adhesion test (cross-cut test; based on JIS K 5600-5-6 (ISO 2409)), and the adhesion was evaluated by 6-grade classification test.

### Curling Resistance Evaluation (1)

The adhesive agent obtained in each of Examples and Comparative Examples was applied to a PET film (size: length × width = 1 cm × 7 cm; thickness: 100 µm) as a resin film (coating thickness: 10 µm) and irradiated with light of 365 nm in the air atmosphere by using an LED irradiator until no tackiness was observed, and a cured product/PET film laminated body was obtained.

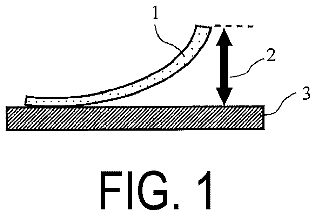

The obtained cured product/PET laminated body (size: length × width = 1 cm × 7 cm) was used as a test piece and placed on a horizontal surface. When one short side of the test piece was pressed down, an amount of floating of the other short side from the horizontal surface was measured. Curling resistance was evaluated based on the criteria described below (FIG. 1). Note that a smaller floating amount indicates superior curling resistance.
Excellent: The floating amount was less than 1 mm.
Good: The floating amount was 1 mm or greater but less than 2 mm.
Somewhat poor: The floating amount was 2 mm or greater but less than 5 mm.
Poor: The floating amount was 5 mm or greater.

The results are summarized and shown in the table below.

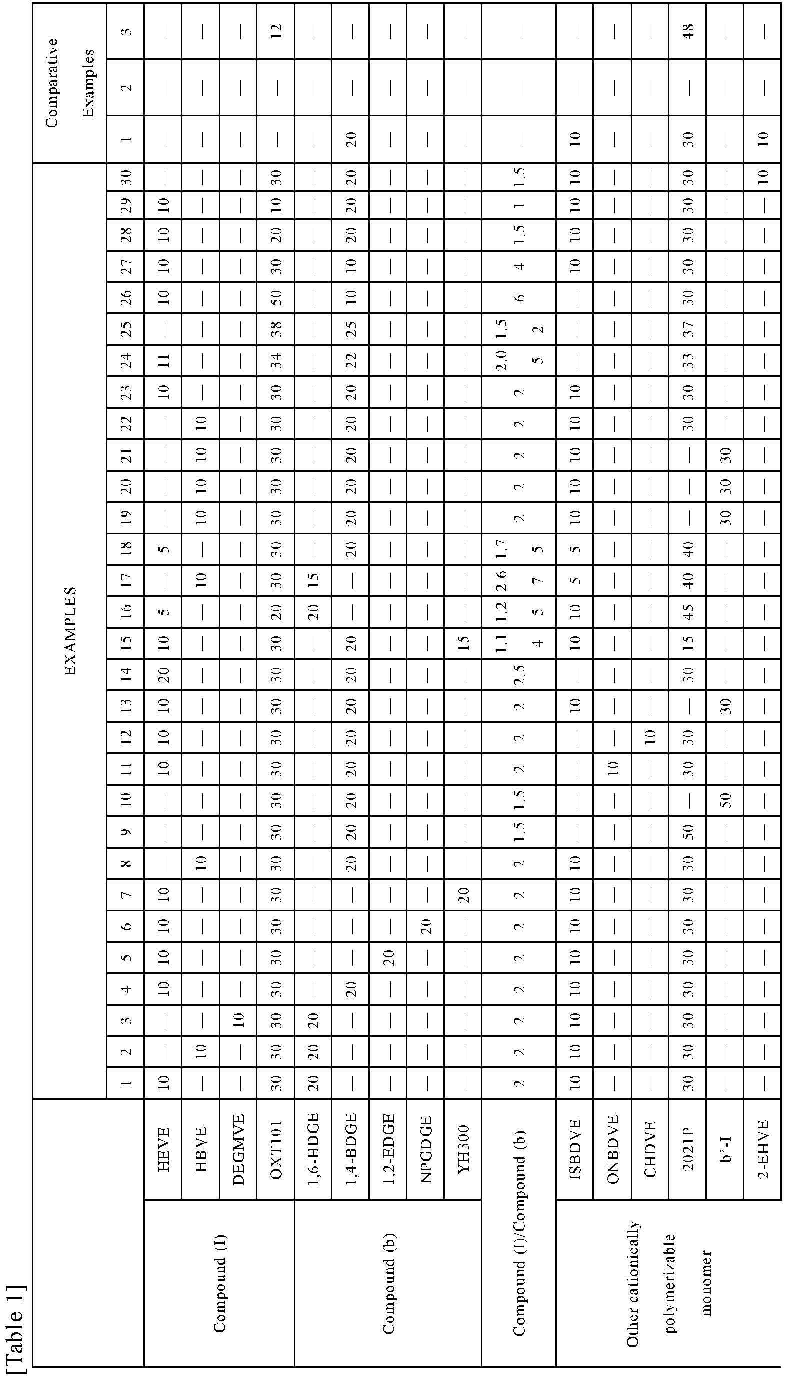

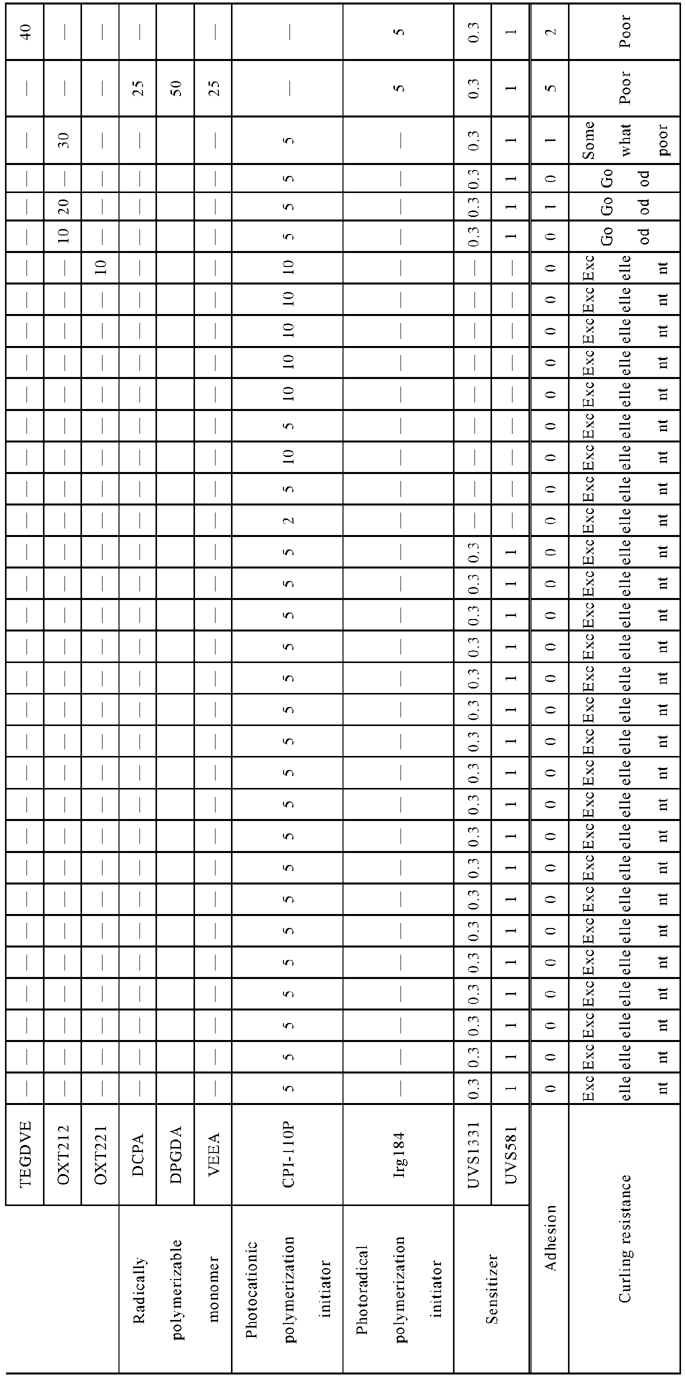

Abbreviations in the tables are described below.
Compound (I)
   HEVE: ethylene glycol monovinyl ether
   HBVE: 4-hydroxybutyl vinyl ether
   DEGMVE: diethylene glycol monovinyl ether
   OXT101: 3-ethyl-3-hydroxymethyloxetane, trade name "ARON OXETANE OXT-101", available from ToaGosei Co., Ltd.
Compound (b)
   1,6-HDGE: 1,6-hexanediol diglycidyl ether
   1,4-BDGE: 1,4-butanediol diglycidyl ether
   1,2-EDGE: ethylene glycol diglycidyl ether
   NPGDGE: neopentyl glycol diglycidyl ether
   YH300: trimethylolpropane triglycidyl ether
Other Cationically Polymerizable Monomer
   ISBDVE: isosorbide divinyl ether, trade name "ISB-DVE", available from Daicel Corporation
   ONBDVE: oxanorbornene divinyl ether
   CHDVE: 1,4-cyclohexane diol divinyl ether
   2021P: 3,4-epoxycyclohexylmethyl(3,4-epoxy)cyclohexanecarboxylate, trade name "CELLOXIDE 2021P", available from Daicel Corporation
   b'-1: (3,4,3',4'-diepoxy)bicyclohexyl
   2-EHVE: 2-ethylhexylvinyl ether
   TEGDVE: triethylene glycol divinyl ether
   OXT212: 3-ethyl-3-[(2-ethylhexyloxy)methyl]oxetane, trade name "ARON OXETANE OXT-212", available from ToaGosei Co., Ltd.
   OXT221: bis[1-ethyl(3-oxetanyl)]methyl ether, product name "ARON OXETANE OXT-221", available from ToaGosei Co., Ltd.
Radically Polymerizable Monomer
   DCPA: tricyclodecane dimethanol diacrylate
   DPGDA: dipropylene glycol diacrylate
   VEEA: 2-(2-vinyloxyethoxy)ethyl acrylate
Curing Catalyst
   CPI-110P: a mixture of diphenyl[4-(phenylthio)phenyl]sulfonium hexafluorophoshate and thiodi-p-phenylene bis(diphenylsulfonium) bis(hexafluorophosphate) (99.5/0.5), trade name "CPI-110P", available from San-Apro Ltd.
   Irg184: 1-hydroxy-cyclohexyl-phenyl-ketone, trade name "IRGACURE 184", available from BASF
Sensitizer
   UVS1331: 9,10-dibuthoxy anthracene, trade name "Anthracure UVS-1331", available from Kawasaki Kasei Chemicals Ltd.
   UVS581: 9,10-di(capryloyloxy)anthracene, trade name "Anthracure UVS-581", available from Kawasaki Kasei Chemicals Ltd.

### Example 31 (Preparation of Laminated Body)

The adhesive agent obtained in Example 8 was coated on a triacetylcellulose film (TAC; size: length × width = 1 cm × 7 cm; thickness: 60 µm) in a manner that the thickness after being dried becomes 15 µm, was adhered onto a glass plate (trade name "G-leaf", available from Nippon Electric Glass Co., Ltd.; thickness: 50 µm), and then was irradiated with light of 365 nm in the air atmosphere by using an LED irradiator (irradiation dose: 2000 mJ/cm²) to obtain a TAC/adhesive layer/G-leaf laminated body. The pencil hardness of the G-leaf surface of the obtained laminated body was measured by a method in accordance with JIS K5600-5-4 (ISO/DIN15184), and the pencil hardness was 9H.

### Example 32 (Preparation of Laminated Body)

A PET/adhesive layer/G-leaf laminated body was obtained in the same manner as in Example 31 except for using a polyethylene terephthalate film (PET; product number: A4300; available from Toyobo Co., Ltd.; size: length × width = 1 cm × 7 cm; thickness: 75 µm) in place of the triacetylcellulose film. The pencil hardness of the G-leaf surface of the obtained laminated body was 9H.

### Total Light Transmittance

Transparency of the laminated body obtained in each of Examples 31 and 32 was evaluated by measuring total light transmittance (in accordance with JIS K 7361).

As Comparative Example 4, the total light transmittance of a PET/adhesive layer/G-leaf laminated body (trade name "Lamion", available from Nippon Electric Glass Co., Ltd.; PET thickness: 38 µm/adhesive layer thickness: 25 µm/G-leaf thickness: 50 µm) was measured in the same manner. Note that the pencil hardness of the G-leaf surface of the Lamion was 9H.

Furthermore, as Comparative Example 5, the total light transmittance of a G-leaf (thickness: 50 µm) only was measured in the same manner. Note that the pencil hardness of the G-leaf surface was 9H.

### Flexibility Evaluation

For the laminated body obtained in each of Examples 31 and 32, a PET/adhesive layer/G-leaf laminated body (trade name "Lamion", available from Nippon Electric Glass Co., Ltd.; PET thickness: 38 µm/adhesive layer thickness: 25 µm/G-leaf thickness: 50 µm) as Comparative Example 4, and a G-leaf (thickness: 50 µm) as Comparative Example 5, the flexibility was evaluated at 25°C by a method in accordance with JIS K 5600-5-1 (Bend test (cylindrical mandrel)). That is, the laminated body was bent in the manner that the G-leaf surface is made concave by using a bending tester (trade name: Mandrel Bending Tester, available from Toyo Seiki Seisaku-sho, Ltd.), the radius of the mandrel was changed to smaller ones, then the radius of the mandrel by which the laminated body was cracked for the first time was taken as the minimum bending radius (mm), and the flexibility was evaluated based on this minimum bending radius. Note that a smaller minimum bending radius indicates superior flexibility.

### Bending Resistance Evaluation (1)

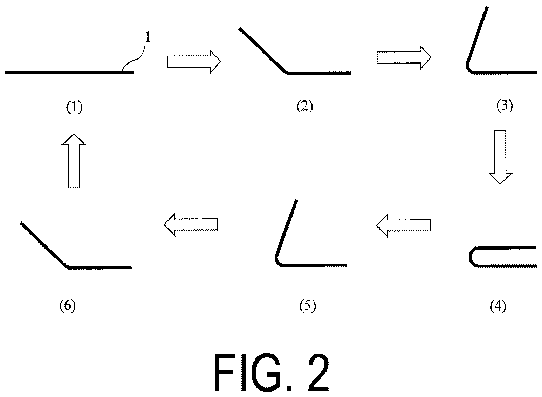

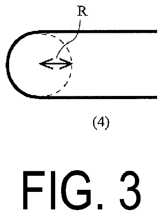

Each of the laminated bodies obtained in Examples 31 and 32, a PET/adhesive layer/G-leaf laminated body (trade name "Lamion", available from Nippon Electric Glass Co., Ltd.; PET thickness: 38 µm/adhesive layer thickness: 25 µm/G-leaf thickness: 50 µm) as Comparative Example 4, and a G-leaf (thickness: 50 µm) as Comparative Example 5 was used as a test piece. At 25°C, the test piece was horizontally placed on a plane in a stretched condition and took a set of operation including bending the test piece at a central part for 180° in a direction that makes the surface of the G-leaf concave and a bending radius 3 mm and then stretching the laminated body again. The operation was performed at a rate of 43 sets per minute. The number of sets at the time when the test piece was cracked was used as an index for the bending resistance (see FIGS. 2 and 3).

### Curling Resistance Evaluation (2)

For each of the laminated bodies obtained in Examples 31 and 32, a PET/adhesive layer/G-leaf laminated body (trade name "Lamion", available from Nippon Electric Glass Co., Ltd.; size: length × width = 1 cm × 7 cm; PET thickness: 38 µm/adhesive layer thickness: 25 µm/G-leaf thickness: 50 µm) as Comparative Example 4, and a G-leaf (size: length × width = 1 cm × 7 cm; thickness: 50 µm) as Comparative Example 5, evaluation was performed in the same manner as in curling resistance evaluation (1) described above.

The results are summarized and shown in the table below.

**[Table 2]**

| | Example 31 | Example 32 | Comparative Example 4 | Comparative Example 5 |
|---|---|---|---|---|
| Total thickness (µm) | 125 | 105 | 113 | 50 |
| Total light transmittance (%) | >90 | >90 | >90 | >90 |
| Minimum bending radius (mm) | 1.2 | 2.5 | 1.7 | 2.3 |
| Bending resistance (set) | >100000 | >100000 | <1 | <1 |
| Curling resistance | Excellent | Excellent | Excellent | Excellent |

### Examples 33 to 41 (Preparation of Laminated Body)

The adhesive agent obtained in Example 8 was coated on a resin film shown in the following table in a manner that the thickness after being dried becomes 15 µm, was adhered onto a glass plate having the minimum bending radius shown in the following table (trade name "G-leaf", available from Nippon Electric Glass Co., Ltd.; thickness: 50 µm) in a manner that a bending direction of a laminated body to be obtained was in parallel with the MD direction, the TD direction, or a direction in the angel of 45° relative to the orientation direction of birefringence of the resin film, and then was irradiated with light of 365 nm in the air atmosphere by using an LED irradiator (irradiation dose: 2000 mJ/cm²) to obtain a resin film/adhesive layer/G-leaf laminated body (10 samples for each example). Note that the minimum bending radius was measured in the same method as "flexibility evaluation" described above.

### Bending Resistance Evaluation (2)

The obtained laminated body (10 samples for each example) was horizontally placed on a plane in a stretched condition and took a set of operation including bending the test piece at a central part for 180° in a direction that makes the surface of the G-leaf concave and a bending radius 3 mm and then stretching the test piece again. The operation was performed for 2000 sets at a rate of 43 sets per minute. The bending resistance was evaluated based on the proportion of the number of the samples in which no cracks are generated.

The results are summarized and shown in the table below.

**[Table 3]**

| | Example 33 | Example 34 | Example 35 | Example 36 | Example 37 | Example 38 | Example 39 | Example 40 | Example 41 |
|---|---|---|---|---|---|---|---|---|---|
| Resin film (thickness: µm) | PET (75) | PET (50) | PET (38) | TAC (60) | PEN (100) | PAI (80) | PET (75) | PET (75) | PET (75) |
| Resin film adhering direction | MD | MD | MD | MD | MD | MD | MD | TD | 45° |
| Minimum bending radius of glass plate (mm) | <3 | <3 | <3 | <3 | <3 | <3 | >3 | <3 | <3 |
| 2000 Set bending resistance (%) | 100 | 100 | 100 | 100 | 100 | 100 | 20 | 50 | 50 |

Abbreviations in the tables are described below.
Resin Film
PET: biaxially oriented PET film, trade name "Cosmoshine A4300", available from Toyobo Co., Ltd.
TAC: biaxially oriented triacetylcellulose film, trade name "FUJITAC TG60UL", available from Fujifilm Corporation
PEN: biaxially oriented polyethylene naphthalate film, trade name "Teonex Q65HA", available from Teijin Film Solutions Limited
PAI: biaxially oriented polyamide imide film, trade name "Taimide OT-050", available from Taimide Tech. Inc.

### Examples 42 to 48 and Comparative Example 6 (Preparation of Laminated Body)

The adhesive agent shown in the following table was coated on a PET film (biaxially oriented PET film, trade name "Cosmoshine A4300", available from Toyobo Co., Ltd.) in a manner that the thickness after being dried becomes the thickness shown in the following table and was adhered onto a glass plate having the minimum bending radius of 3 mm or less (trade name "G-leaf", available from Nippon Electric Glass Co., Ltd.; thickness: 50 µm) in a manner that a bending direction of a laminated body to be obtained was in parallel with the MD direction of the PET film. The adhesive agent was then cured by the following method to obtain a PET/adhesive layer/G-leaf laminated body.

### Curing Method

Examples 42, 45, 47, and 48: Curing was performed by heating and drying the solvent.
Example 43: Curing was performed by irradiation with ultraviolet light.
Example 44: After the solvent was heated and dried, curing was performed by irradiation with ultraviolet light.
Example 46: A sheet-like adhesive agent was sandwiched between the glass and the PET, and then curing was performed by vacuum heating and pressure-bonding.
Comparative Example 6: Curing was performed by allowing it stand still for 24 hours at room temperature.

Note that the storage modulus and Tg measurements of the adhesive layer were performed under the following conditions by cutting a cured product of the adhesive agent (thickness: 0.5 mm) into the width of 4 mm and the length of 3 cm and using this as a sample for dynamic mechanical analysis (DMA).

### Measurement Instrument and Measurement Condition

Measurement instrument: solid viscoelasticity measurement instrument ("RSA III", available from TA Instruments)
Atmosphere: Nitrogen
Temperature range: 20 to 350°C
Temperature increase: 5°C/min
Deformation mode: Tensile mode

Each of the laminated bodies obtained in Examples 42 to 48 and Comparative Example 6, a PET/adhesive layer/G-leaf laminated body (trade name "Lamion", available from Nippon Electric Glass Co., Ltd.; PET thickness: 38 µm/adhesive layer thickness: 25 µm/G-leaf thickness: 50 µm) as Comparative Example 7, and a G-leaf (thickness: 50 µm) as Comparative Example 8 was used as a test piece, and evaluation of the bending resistance thereof was performed in the same manner as in bending resistance evaluation (1) described above.

The results are summarized and shown in the table below.

**[Table 4]**

| | Example 42 | Example 43 | Example 44 | Example 45 | Example 46 | Example 47 | Example 48 | Comparative Example 6 | Comparative Example 7 | Comparative Example 8 |
|---|---|---|---|---|---|---|---|---|---|---|
| Adhesive agent | UA1 | UA2 | UA3 | EVA1 | EVA2 | EVA3 | EVA4 | SL | - | - |
| Storage modulus of adhesive layer (MPa) | 171 | 100 | 1145 | 45 | 50 | 112 | 21 | 1 | - | - |
| Tg of adhesive layer (°C) | - | 12 | 73 | -16 | -8 | -21 | -5 | 9.7 | - | - |
| Thickness of adhesive layer (µm) | 30 | 31 | 23 | 49 | 32 | 40 | 31 | 46 | 25 | - |
| Bending resistance (set) | >100000 | >100000 | 50000 | >100000 | 9000 | 430 | 63 | 1 | <1 | <1 |

Abbreviations in the tables are described below.

### Adhesive Agent

UA1: composition containing an urethane-modified acrylic polymer and a solvent (ethyl acetate/isopropyl alcohol) (trade name "Acrit 8UA-017", available from Taisei Fine Chemical Co., Ltd.)
UA2: composition obtained by blending 5 parts by weight of Irgacure 184 in 100 parts by weight of UV curable urethane acrylate (trade name "Acrit 8UX-077A", available from Taisei Fine Chemical Co., Ltd.)
UA3: composition obtained by blending 0.2 parts by weight of Irgacure 184 in 100 parts by weight of UV curable urethane acrylic polymer (trade name "Acrit 8BR-600", available from Taisei Fine Chemical Co., Ltd.)
EVA1: composition containing vinyl acetate, an ethylene-vinyl acetate copolymer, and a solvent (water) (trade name "Cevian-A 56094", Daicel FineChem Ltd.)
EVA2: sheet-like adhesive agent formed from a modified ethylene-vinyl acetate copolymer (trade name "MELTHENE G", available from Tosoh Nikkemi Corporation)
EVA3: composition containing a blend of vinyl acetate, an ethylene-vinyl acetate copolymer, a vinyl acetate-alkyl acrylate-based copolymer, and a solvent (water/methylcyclohexanone) (trade name "Cevian-A 56148", Daicel FineChem Ltd.)
EVA4: composition containing vinyl acetate, an ethylene-vinyl acetate copolymer, a styrene-butadiene copolymer, and a solvent (water/methylcyclohexanone) (trade name "Cevian-A 609", Daicel FineChem Ltd.)
SL: silicone-based elastic adhesive, trade name "Cemedine Super X Hyper Wide", available from Cemedine Co., Ltd.

To summarize the above, configurations according to an embodiment of the present invention and variations thereof will be described below.
[1] A laminated body comprising a structure having a glass plate having a thickness of 150 µm or less and a resin film laminated with an adhesive layer; the laminated body having a bending resistance based on a test below of 10 or greater.

### Bending Resistance Test:

In the case where a set of operation includes bending a laminated body for 180° from a state where the laminated body is stretched, in a direction that makes a surface of a glass plate concave as an inner side and a bending radius 3 mm and then stretching the laminated body again, an index of the bending resistance is the number of sets of the operation until the laminated body cracks when the operation was performed at a rate of 43 sets per minute.
[2] A laminated body comprising a structure having a glass plate having a thickness of 150 µm or less and a minimum bending radius of 3 mm or less and a resin film laminated with an adhesive layer.
[3] A laminated body comprising a structure having a glass plate having a thickness of 150 µm or less and a resin film laminated with an adhesive layer, the laminated body having a bending function in a direction that is along an MD direction of the resin film.
[4] The laminated body described in any one of [1] to [3], where adhesion of the adhesive layer to a glass plate is classified as 0 to 2 in a 6-grade classification test (in accordance with JIS K 5600-5-6).
[5] The laminated body described in any one of [1] to [3], where a storage modulus of the adhesive layer at 20°C measured by using a dynamic viscoelasticity measuring device is 10 MPa or greater.
[6] The laminated body described in any one of [1] to [3], where a glass transition temperature of the adhesive layer measured by using a dynamic viscoelasticity measuring device is lower than 5°C.
[7] The laminated body described in any one of [1] to [6], where the adhesive layer is a cured product of an adhesive agent (1) below.
   The adhesive agent (1): The adhesive agent (1) contains cationically polymerizable monomers and a curing catalyst and contains, as the cationically polymerizable monomers, at least 10 wt.% of a compound having at least one hydroxy group and at least one cationically polymerizable group selected from the group consisting of a vinyl ether group, an epoxy group, and an oxetanyl group in a molecule, relative to a total amount of the cationically polymerizable monomers, and at least 5 wt.% of a compound represented by Formula (b), relative to the total amount of the cationically polymerizable monomers.
[8] The laminated body described in [7], where the compound represented by Formula (b) is at least one type of compound selected from the group consisting of compounds represented by Formulas (b-1) to (b-5).
[9] The laminated body described in [7] or [8], where the compound having at least one hydroxy group and at least one cationically polymerizable group selected from the group consisting of a vinyl ether group, an epoxy group, and an oxetanyl group in a molecule is a compound having one vinyl ether group and one hydroxy group (i-1) and/or a compound having one oxetanyl group and one hydroxy group (i-3).
[10] The laminated body described in [7] or [8], where the compound having at least one hydroxy group and at least one cationically polymerizable group selected from the group consisting of a vinyl ether group, an epoxy group, and an oxetanyl group in a molecule is at least one type of compound selected from the group consisting of compounds represented by Formulas (i-1-1) to (i-1-3) and (i-3-1).
[11] The laminated body described in any one of [7] to [10], where (the compound having at least one hydroxy group and at least one cationically polymerizable group selected from the group consisting of a vinyl ether group, an epoxy group, and an oxetanyl group in a molecule)/(the compound represented by Formula (b)) (weight ratio) is from 0.5 to 6.5.
[12] The laminated body described in any one of [7] to [11], where the adhesive agent (1) further contains, as the cationically polymerizable monomers, at least 10 wt.% of a compound represented by Formula (b'), relative to the total amount of the cationically polymerizable monomers.
[13] The laminated body described in [12], where the compound represented by Formula (b') is at least one type of compound selected from the group consisting of 3,4-epoxycyclohexylmethyl(3,4-epoxy)cyclohexane carboxylate, (3,4,3',4'-diepoxy)bicyclohexyl, bis(3,4-epoxycyclohexylmethyl)ether, 1,2-epoxy-1,2-bis(3,4-epoxycyclohexan-1-yl)ethane, 2,2-bis(3,4-epoxycyclohexan-1-yl)propane, and 1,2-bis(3,4-epoxycyclohexan-1-yl)ethane.
[14] The laminated body described in any one of [1] to [6], where the adhesive layer is a cured product of an acrylic urethane-based adhesive agent (2) containing urethane (meth)acrylate or a polymer thereof.
[15] The laminated body described in any one of [1] to [6], where the adhesive layer is formed from a cured product of an acrylic urethane-based adhesive agent (2) containing urethane (meth)acrylate or a polymer thereof, and a storage modulus at 20°C of the cured product measured by using a dynamic viscoelasticity measuring device is 10 MPa or greater.
[16] The laminated body described in any one of [1] to [6], where the adhesive layer is a cured product of a vinyl acetate-based adhesive agent (3) containing a vinyl acetate-based polymer.
[17] The laminated body described in any one of [1] to [6], where the adhesive layer is formed from a cured product of a vinyl acetate-based adhesive agent (3) containing a vinyl acetate-based polymer, and a glass transition temperature (Tg) of the cured product measured by using a dynamic viscoelasticity measuring device is 5°C or lower.
[18] A laminated body comprising a structure having a glass plate having a thickness of 150 µm or less and a resin film laminated with an adhesive layer formed from a cured product of an adhesive agent below. Adhesive Agent:
   The adhesive agent contains cationically polymerizable monomers and a curing catalyst and contains, as the cationically polymerizable monomers, at least 10 wt.% of a compound having at least one hydroxy group and at least one cationically polymerizable group selected from the group consisting of a vinyl ether group, an epoxy group, and an oxetanyl group in a molecule, relative to a total amount of the cationically polymerizable monomers, and at least 5 wt.% of a compound represented by Formula (b), relative to the total amount of the cationically polymerizable monomers.
[19] The laminated body described in any one of [1] to [18], where a total thickness of the laminated body is 300 µm or less.
[20] The laminated body described in any one of [1] to [19], where a thickness of the glass plate is 150 µm or less.
[21] The laminated body described in any one of [1] to [20], where the resin film is a plastic film formed from at least one type of material selected from the group consisting of PET, PAI, PI, cellulose acetate, and PEN.
[22] The laminated body described in any one of [1] to [20], where the resin film is a plastic film formed from at least one type of material selected from the group consisting of PET, PAI, TAC, and PEN.
[23] The laminated body described in any one of [1] to [22], where a thickness of the resin film is 150 µm or less.
[24] The laminated body described in any one of [1] to [23], where a total light transmittance of the laminated body is 80% or greater.
[25] The laminated body described in any one of [1] to [24], where a minimum bending radius of the glass plate is 3 mm or less.
[26] The laminated body described in any one of [1] to [25], where the resin film is formed by laminating in a manner that an MD direction of the resin film is along a bending direction of the laminated body.
[27] A wound body formed by winding the laminated body described in any one of [1] to [26] in a roll form.
[28] A component for a flexible device comprising the laminated body described in any one of [1] to [26].
[29] A display, a protective film, a barrier film, or a TFT substrate comprising the laminated body described in any one of [1] to [26].
[30] A flexible device comprising the laminated body described in any one of [1] to [26].
[31] A personal digital assistance comprising the laminated body described in any one of [1] to [26].
[32] An adhesive agent containing cationically polymerizable monomers and a curing catalyst and containing, as the cationically polymerizable monomers, at least 10 wt.% of a compound having at least one hydroxy group and at least one cationically polymerizable group selected from the group consisting of a vinyl ether group, an epoxy group, and an oxetanyl group in a molecule, relative to a total amount of the cationically polymerizable monomers, and at least 5 wt.% of a compound represented by Formula (b), relative to the total amount of the cationically polymerizable monomers.
[33] The adhesive agent described in [32], the adhesive agent being an adhesive agent for glass.
[34] A method for producing a laminated body, the method comprising adhering a glass plate having a thickness of 150 µm or less and a resin film with at least one type of adhesive agent selected from the group consisting of the following adhesive agents (1) to (3), then curing the adhesive agent, and obtaining the laminated body described in any one of [1] to [26].
   The adhesive agent (1): An adhesive agent containing cationically polymerizable monomers and a curing catalyst and containing, as the cationically polymerizable monomers, at least 10 wt.% of a compound having at least one hydroxy group and at least one cationically polymerizable group selected from the group consisting of a vinyl ether group, an epoxy group, and an oxetanyl group in a molecule, relative to a total amount of the cationically polymerizable monomers, and at least 5 wt.% of a compound represented by Formula (b), relative to the total amount of the cationically polymerizable monomers
   Adhesive agent (2): Acrylic urethane-based adhesive agent
   Adhesive agent (3): Vinyl acetate-based adhesive agent
[35] A wound body formed by winding a laminated body comprising a structure having a glass plate having a thickness of 150 µm or less and a resin film laminated with an adhesive layer, in a roll form in a direction that is along an MD direction of the resin film.
[36] A component for a flexible device, the component comprising a laminated body having a structure having a glass plate having a thickness of 150 µm or less and a resin film laminated with an adhesive layer, the laminated body having a bending function in a direction that is along an MD direction of the resin film.
[37] A display, a protective film, a barrier film, or a TFT substrate comprising a laminated body having a structure having a glass plate having a thickness of 150 µm or less and a resin film laminated with an adhesive layer, the laminated body having a bending function in a direction that is along an MD direction of the resin film.
[38] A flexible device comprising a laminated body having a structure having a glass plate having a thickness of 150 µm or less and a resin film laminated with an adhesive layer, the laminated body having a bending function in a direction that is along an MD direction of the resin film.
[39] A personal digital assistance comprising a laminated body having a structure having a glass plate having a thickness of 150 µm or less and a resin film laminated with an adhesive layer, the laminated body having a bending function in a direction that is along an MD direction of the resin film.

### Industrial Applicability

The laminated body according to an embodiment of the present invention has excellent curling resistance, flexibility, and bending resistance. Furthermore, the laminated body is less likely to be broken compared to a thinned glass by itself, and ease of handling is achieved. Therefore, the laminated body can be suitably used as touch screens of personal digital assistances and the like, displays such as organic EL displays, electronic materials or electronic components that require flexibility such as protective films.

### Reference Signs List

1 Laminated body
2 Floating amount
3 Horizontal plane
4 Glass plate
5 Adhesive layer
6 Resin film

## Claims

1. A laminated body comprising a structure having a glass plate having a thickness of 150 µm or less and a resin film laminated with an adhesive layer;
the laminated body having a bending resistance based on a test below of 10 or greater,
Bending Resistance Test:
In the case where a set of operation includes bending a laminated body for 180° from a state where the laminated body is stretched, in a direction that makes a surface of a glass plate concave and a bending radius 3 mm and then stretching the laminated body again, an index of the bending resistance is the number of sets of the operation until the laminated body cracks when the operation was performed at a rate of 43 sets per minute.

2. The laminated body according to claim 1, wherein adhesion of the adhesive layer to a glass plate is classified as 0 to 2 in a 6-grade classification test (in accordance with JIS K 5600-5-6).

3. The laminated body according to claim 1, wherein a storage modulus of the adhesive layer at 20°C measured by using a dynamic viscoelasticity measuring device is 10 MPa or greater.

4. The laminated body according to claim 1, wherein a glass transition temperature of the adhesive layer measured by using a dynamic viscoelasticity measuring device is lower than 5°C.

5. The laminated body according to any one of claims 1 to 4, wherein a total thickness of the laminated body is 300 µm or less.

6. The laminated body according to any one of claims 1 to 5, wherein a total light transmittance of the laminated body is 80% or greater.

7. The laminated body according to any one of claims 1 to 6, wherein the adhesive layer is a cured product of an adhesive agent (1);
The adhesive agent (1): The adhesive agent (1) comprises cationically polymerizable monomers and a curing catalyst and comprises, as the cationically polymerizable monomers, at least 10 wt.% of a compound having at least one hydroxy group and at least one cationically polymerizable group selected from the group consisting of a vinyl ether group, an epoxy group, and an oxetanyl group in a molecule, relative to a total amount of the cationically polymerizable monomers, and at least 5 wt.% of a compound represented by Formula (b) below, relative to the total amount of the cationically polymerizable monomers; 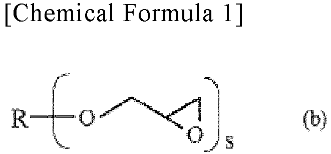 in the formula, R represents an s-valent straight-chain or branched saturated aliphatic hydrocarbon group or an s-valent group in which two or more straight-chain or branched saturated aliphatic hydrocarbon groups are bonded through an ether bond, and s represents an integer of 2 or greater.

8. The laminated body according to claim 7, wherein the adhesive agent (1) further comprises, as the cationically polymerizable monomers, at least 10 wt.% of a compound represented by Formula (b') below, relative to the total amount of the cationically polymerizable monomers; 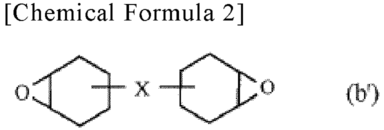 where X represents a single bond or a linking group.

9. The laminated body according to any one of claims 1 to 6, wherein the adhesive layer is a cured product of an acrylic urethane-based adhesive agent (2) containing urethane (meth)acrylate or a polymer thereof.

10. The laminated body according to any one of claims 1 to 6, wherein the adhesive layer is a cured product of a vinyl acetate-based adhesive agent (3) containing a vinyl acetate-based polymer.

11. The laminated body according to any one of claims 1 to 10, wherein a minimum bending radius of the glass plate is 3 mm or less.

12. The laminated body according to any one of claims 1 to 11, wherein the resin film is formed by laminating in a manner that an MD direction of the resin film is along a bending direction of the laminated body.

13. A laminated body comprising a structure having a glass plate having a thickness of 150 µm or less and a resin film laminated with an adhesive layer formed from a cured product of an adhesive agent below;
The adhesive agent: The adhesive agent comprises cationically polymerizable monomers and a curing catalyst and comprises, as the cationically polymerizable monomers, at least 10 wt.% of a compound having at least one hydroxy group and at least one cationically polymerizable group selected from the group consisting of a vinyl ether group, an epoxy group, and an oxetanyl group in a molecule, relative to a total amount of the cationically polymerizable monomers, and at least 5 wt.% of a compound represented by Formula (b) below, relative to the total amount of the cationically polymerizable monomers; 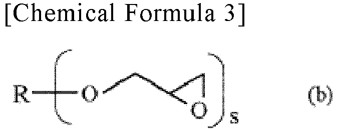 in the formula, R represents an s-valent straight-chain or branched saturated aliphatic hydrocarbon group or an s-valent group in which two or more straight-chain or branched saturated aliphatic hydrocarbon groups are bonded through an ether bond, and s represents an integer of 2 or greater.

14. A wound body formed by winding the laminated body described in any one of claims 1 to 13 in a roll form.

15. A component for a flexible device, the component comprising the laminated body described in any one of claims 1 to 13.

16. A flexible device comprising the laminated body described in any one of claims 1 to 13.

17. An adhesive agent for glass, the adhesive agent comprising cationically polymerizable monomers and a curing catalyst and comprising, as the cationically polymerizable monomers, at least 10 wt.% of a compound having at least one hydroxy group and at least one cationically polymerizable group selected from the group consisting of a vinyl ether group, an epoxy group, and an oxetanyl group in a molecule, relative to a total amount of the cationically polymerizable monomers, and at least 5 wt.% of a compound represented by Formula (b) below, relative to the total amount of the cationically polymerizable monomers: 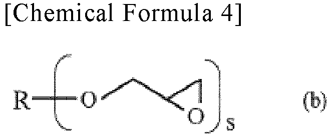 where R represents an s-valent straight-chain or branched saturated aliphatic hydrocarbon group or an s-valent group in which two or more straight-chain or branched saturated aliphatic hydrocarbon groups are bonded through an ether bond, and s represents an integer of 2 or greater.

18. A method for producing a laminated body, the method comprising:
adhering a glass plate having a thickness of 150 µm or less and a resin film with an adhesive agent (1) containing cationically polymerizable monomers and a curing catalyst and containing, as the cationically polymerizable monomers, at least 10 wt.% of a compound having at least one hydroxy group and at least one cationically polymerizable group selected from the group consisting of a vinyl ether group, an epoxy group, and an oxetanyl group in a molecule, relative to a total amount of the cationically polymerizable monomers, and at least 5 wt.% of a compound represented by Formula (b) below, relative to the total amount of the cationically polymerizable monomers: 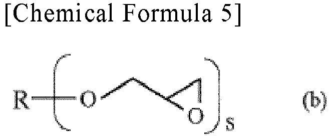 where R represents an s-valent straight-chain or branched saturated aliphatic hydrocarbon group or an s-valent group in which two or more straight-chain or branched saturated aliphatic hydrocarbon groups are bonded through an ether bond, and s represents an integer of 2 or greater,
an acrylic urethane-based adhesive agent (2), or
a vinyl acetate-based adhesive agent (3); and then
curing the adhesive agent to obtain the laminated body described in any one of claims 1 to 13.
